# EUROPÄISCHE PATENTSCHRIFT

(11) **EP 1 455 943 B1**
(45) Veröffentlichungstag und Bekanntmachung des Hinweises auf die Patenterteilung: **19.03.2008**
(21) Anmeldenummer: 02796572.2
(22) Anmeldetag: 04.12.2002
(51) Int. Cl.: B01L 3/00

(54) **EINRICHTUNGEN UND VERFAHREN ZUR VERARBEITUNG BIOLOGISCHER ODER CHEMISCHER SUBSTANZEN ODER DEREN SUBSTANZGEMISCHE**
DEVICE AND METHOD FOR PROCESSING BIOLOGICAL OR CHEMICAL SUBSTANCES OR SUBSTANCE MIXTURES THEREOF
DISPOSITIF ET PROCEDE POUR LE TRAITEMENT DE SUBSTANCES BIOLOGIQUES OU CHIMIQUES OU DE MELANGES DE TELLES SUBSTANCES

(30) Priorität: 04.12.2001 DE 10159198; 22.02.2002 DE 10207648
(43) Veröffentlichungstag der Anmeldung: 15.09.2004
(73) Patentinhaber: OMX GmbH, 82234 Wessling (DE)
(72) Erfinder: Eichacker, Lutz, Dr., 82234 Wessling (DE)
(74) Vertreter: Fleuchaus, Michael A.
(86) Internationale Anmeldenummer: PCT/EP2002/013739
(87) Internationale Veröffentlichungsnummer: WO 2003/047756

(56) Entgegenhaltungen:
- WO-A-00/12675
- WO-A-00/72968
- WO-A-01/21311
- WO-A-89/05456
- WO-A-95/27561
- DE-A- 4 124 778
- DE-C- 332 332
- US-A- 4 522 923
- US-A- 5 501 841
- US-A- 5 624 638
- US-A- 5 783 148

## Beschreibung

Die Verarbeitung von biologischen Materialien im biochemischen Labor erfolgt bevorzugt in Reaktionsgefäßen. Solche Reaktionsgefäße weisen in der Regel einen Reaktionsraum auf, welcher mit einer Öffnung zum Einbringen von biologischen und/oder chemischen Substanzen versehen ist. Der Verschluss des Reaktionsraumes erfolgt üblicherweise mit einem Deckel, der entweder separat oder mit den Reaktionsgefäß verbunden ausgeführt ist.

Bei der Verarbeitung von biologischem Materialien in derartigen Reaktionsgefäßen werden üblicherweise nur einzelne Reaktionsschritte in ein und dem selbem Reaktionsgefäß durchgeführt, so dass beispielsweise das Reaktionsgefäß vor der Durchführung der Reaktion mit den Reaktionsedukten beladen wird und die Reaktionsprodukte dem Reaktionsgefäß nach der Reaktion wieder entnommen werden und das Reaktionsgefäß verworfen wird.

Eine eingeschränkt anwendbare Möglichkeit mehrere Reaktionen in Folge in ein und dem selben Reaktionsgefäß durchzuführen besteht dann, wenn das Reaktionsprodukt unverändert als Reaktionsedukt für die jeweilige Folgereaktion verwendet werden kann. Es kann dann in dem Reaktionsgefäß verbleiben und nach dem Hinzufügen weiterer Reaktionsedukte die Folgereaktion in diesem Reaktionsgefäß durchgeführt werden.

Als nachteilig hierbei erweißt sich jedoch, dass beim gegebenenfalls mehrfachen Öffnen und Beladen des Reaktionsgefäßes mit Folgereaktionsedukten bzw. bei Entnehmen der Reaktionsprodukte aus den Reaktionsgefäßen zur Durchführung weiterer Reaktionen die Gefahr von Kontaminationen besteht. Derartige Kontaminationen können bei der heute erreichbaren Empfindlichkeit von biologischen oder biochemischen Verfahren zu stark verfälschten und damit unbrauchbaren Ergebnissen führen.

Ein weiterer Nachteil bei der Durchführung von biologischen oder biochemischen Reaktionen mit den bekannten Reaktionsgefäßen ist der hohe Laboraufwand, der durch die zahlreichen Verarbeitungsschritte zwischen den einzelnen Reaktionen entsteht und durch den die Verarbeitung von biologischen Materialien üblicherweise stark zeit-, arbeits- und kostenaufwendig und somit ineffizient wird.

Aufgabe der vorliegenden Erfindung ist es deshalb, eine Reaktionseinrichtung bzw. ein Reaktionsmodul sowie ein Verfahren zur Verfügung zu stellen, welches gegenüber dem Stand der Technik verbessert ist und insbesondere eine Steigerung der Genauigkeit bzw. der Effizienz bei der Durchführung von biologischen oder biochemischen Reaktionen ermöglicht.

Zur Lösung dieser Aufgabe stellt die Erfindung eine Reaktionseinrichtung zur Verfügung, welche wenigstens zwei Reaktionsräume aufweist, die durch wenigstens einen Übergangsbereich miteinander in Verbindung stehen, welcher einen sich verengenden Querschnitt aufweist und in eine Kapillare übergeht. Die erfindungsgemäße Reaktionseinrichtung kann hierbei beispielsweise als Gefäß ausgebildet sein, welches zwei separate und durch einen ersten Übergangsbereich miteinander verbundene Reaktionsräume aufweist. Der erste Übergangsbereich weist wenigstens ein bezüglich der Längsachse der Reaktionseinrichtung geneigt verlaufendes Begrenzungselement auf. Der zweite Reaktionsraum ist gegenüber der Umgebung abgeschlossen. Besonders bevorzugt weist der Übergangsbereich ein zur Längsachse der Reaktionseinrichtung im wesentlichen zylindersymetrisch verlaufendes, trichterförmiges Begrenzungselement auf, welches im wesentlichen zentrisch innerhalb der Reaktionseinrichtung angeordnet ist.

In einer weiteren Ausführungsform weist der Übergangsbereich ein gegenüber der Wand der Reaktionseinrichtung geneigtes Begrenzungselement auf, so dass der Übergangsbereich ebenfalls einen sich verengenden bzw. verjüngenden Querschnitt aufweist, der jedoch nicht symetrisch zur Längsachse der Reaktionseinrichtung verläuft, sondern zwischen dem Begrenzungselement und der Wandung der Reaktionseinrichtung und somit im wesentlichen exzentrisch angeordnet ist.

In einer bevorzugten Die Kapillar weist, minimalen Querschnitt von vorzugsweise weniger als 1 µm, weniger als 5 µm, weniger als 10 µm, weniger als 20 µm, weniger als 50 µm, weniger als 100 µm, weniger als 200 µm, weniger als 500 µm, weniger als 1 mm auf.

Durch den Übergangsbereich stehen die Reaktionsräume der Reaktionseinrichtung in einer stoff- bzw. substanzdurchlässigen Verbindung, wobei der Querschnitt vorzugsweise so gewählt ist, dass das in den ersten Reaktionsraum eingebrachte biologische, biochemische und/oder chemische Material aufgrund seiner Beschaffenheit, wie beispielsweise Molekulargröße, Viskosität, Oberflächenspannung oder dergleichen unter normalen Bedingungen an einem Durchtritt durch den Übergangsbereich in den zweiten Reaktionsraum hinein im wesentlichen gehindert ist.

Ein Übergangbereich im Sinne der vorliegenden Erfindung ist ein Bereich, durch den hindurch ein biologisches, biochemisches oder chemisches Material durch eine exogene Einflussnahme oder durch eine Veränderung der Materialeigenschaften des Materials, wie z. B. Veränderung der Oberflächenspannung, Materialgröße, Viskosität oder dergleichen, befördert wird und dabei eine Wechselwirkung mit anderen Komponenten, beispielsweise Teilbereichen des Übergangsbereiches und/oder eine Zustandsänderung, in Form einer Zerstörung der Polymermatrix-Struktur des Materials, erfolgt.

Bei einer besonders bevorzugten Ausführungsform der vorliegenden Erfindung ist die Reaktionseinrichtung so ausgestaltet, dass in den ersten Reaktionsraum der Reaktionseinrichtung eingebrachte Materialien bzw. Substanzen vor oder nach Ablauf der gewünschten Reaktion durch den ersten Übergangsbereich hindurch in den zweiten Reaktionsraum befördert werden können. Hierzu muss entweder die Beschaffenheit der Materialien derart verändert werden, dass es durch den ersten Übergangsbereich hindurch in den zweiten Reaktionsraum übergehen kann oder aber es muss auf die Materialien eine Kraft, vorzugsweise eine Schwerkraft, insbesondere Zentrifugalkraft, elektrische und/oder magnetische Kraft angewandt werden. Besonders bevorzugt werden die Materialien vom ersten Reaktionsraum durch Anordnung der Reaktionseinrichtung in einer Zentrifuge und damit durch Ausübung einer Schwerkraft auf die Materialien durch den ersten Übergangsbereich hindurch in den zweiten Reaktionsraum befördert.

Auf diese Weise ist die Durchführung von zwei oder, bei entsprechender Ausgestaltung der erfindungsgemäßen Einrichtung, mehreren Reaktionen in verschiedenen Reaktionsräumen der selben Reaktionseinrichtung möglich, ohne dass der Reaktionseinrichtung zwischen den einzelnen Reaktionen die Reaktionsprodukte oder -edukte entnommen bzw. zugeführt werden müssen.

Durch eine Krafteinwirkung vorgegebener Intensität oder Art auf die in die Reaktionsräumen befindlichen Materialien bzw. Substanzen können diese somit gezielt zwischen den verschiedenen Reaktionsräumen bewegt werden.

Zur Erzeugung von Zentrifugal- bzw. Gravitationskräften kann die Reaktionseinrichtung beispielsweise in dem Läufer einer laborüblichen Zentrifuge angeordnet werden. Durch die Vorgabe der Drehzahl mit der die Zentrifuge betrieben wird, kann die auf die Reaktionseinrichtung bzw. die darin enthaltenen Materialien bzw. Substanzen wirkende Schwerkraft beliebig variiert werden.

Hierdurch wird bei einer weiteren Ausführungsform der vorliegenden Erfindung mit mehreren übereinander angeordneten Übergangsbereichen erreicht, dass bei einer ersten vorgegebenen Zentrifugendrehzahl bzw. Schwerkraft, welche auf die Substanzen angewandt wird, ein Übergang der in den ersten Reaktionsraum eingebrachten Materialien bzw. Substanzen bis lediglich in den zweiten Reaktionsraum erfolgt, wobei dies beispielsweise durch eine geeignete Wahl einerseits der Stoffparameter, wie beispielsweise Viskosität, Molekulargröße, spezifische Gewicht und/oder Oberflächenspannung und andererseits der Schwerkraft erfolgt.

Bei einer weiteren, von der ersten Drehzahl verschiedenen, zweiten Drehzahl erfolgt dann ein Übergang der Materialien vom zweiten Reaktionsraum durch einen zweiten Übergangsbereich in einen dritten Reaktionsraum. Auf diese Weise kann eine beliebige Anzahl von aufeinanderfolgenden biologischen oder biochemischen Reaktionen in ein und demselben Reaktionsgefäß durchgeführt werden, wobei lediglich eine Variation der auf die in der Reaktionseinrichtung enthaltenen Substanzen einwirkenden Kraft erfolgt.

Neben der Schwerkraftwirkung ist außerdem jede andere Form der Krafteinwirkung auf die eingebrachten Substanzen bzw. Materialien denkbar, wie beispielsweise die Anwendung von Über- oder Unterdruck.

In einer nicht zum Gegenstand der Erfindung gehörigen Ausführungsform weist das Begrenzungselement wenigstens eine Durchführung auf, welche beispielsweise randseitig am Begrenzungselement angeordnet ist und welche einen aus Sicht des zweiten Reaktionsraumes ebenfalls sich verjüngenden Querschnitt aufweist. Die Durchführung des Begrenzungselementes kann dabei bezüglich der Längsachse der Reaktionseinrichtung symmetrisch, insbesondere ringförmig oder kreissegmentförmig, oder auch asymmetrisch, beispielsweise lediglich an einer Seite der Reaktionseinrichtung angeordnet sein. Durch eine derartige Durchführung besteht die Möglichkeit, die vom ersten Reaktionsraum in den zweiten Reaktionsraum, beispielweise durch Zentrifugation, beförderten biologischen oder biochemischen Substanzen, welche im zweiten Reaktionsraum zur Reaktion gebracht wurden, durch ein Umorientieren der auf die im zweiten Reaktionsraum einwirkenden Kräfte, beispielsweise durch ein Umorientieren der Reaktionseinrichtung in der Zentrifuge durch die Durchführung hindurch zurück in den ersten Reaktionsraum zu befördern.

In einer nicht zum Gegenstand der Erfindung gehörigen Ausführungsform ist die Durchführung des Begrenzungselements außerdem durch ein gitterförmiges Element und/oder ein Element, welches porenförmige Durchführungen mit einer vorgegebenen Porengröße aufweist, versehen. Derartige gitterförmige Elemente oder Elemente mit porenförmigen Durchführungen können beispielsweise Molekularsiebe oder Filterelemente sein.

Bei der Rückführung der Substanzen aus dem zweiten Reaktionsraum in den ersten Reaktionsraum beispielsweise eine gleichzeitige Abtrennung von unerwünschten Reaktionsprodukten oder Substanzen, welche bei der Reaktion im zweiten Reaktionsraum vorhanden waren oder entstanden sind, erfolgen. Besonders bevorzugt erfolgt bei der Rückführung der Substanzen aus dem zweiten Reaktionsraum in den ersten Reaktionsraum eine Abfiltration von Polymeren und/oder Proteinen, wobei derartige Proteine vorzugsweise Enzyme mit einem über einem bestimmten Grenzgewicht liegenden Molekulargewicht sind. Insbesondere können durch ein Molekutarsieb Moleküle hindurchtreten, welche weniger als 500 kDa Molekulargewicht haben, vorzugsweise weniger als 200 kDa Molekulargewicht haben, vorzugsweise weniger als 100 kDa Molekulargewicht haben, vorzugsweise weniger als 50 kDa Molekulargewicht haben, vorzugsweise weniger als 20 kDa Molekulargewicht haben, vorzugsweise weniger als 10 kDa Molekulargewicht haben, vorzugsweise weniger als 5 kDa Molekulargewicht haben, vorzugsweise weniger als 2 kDa Molekulargewicht haben, vorzugsweise weniger als 1 kDa Molekulargewicht haben.

Dabei ist zumindest der zweite Reaktionsraum einer bevorzugten Ausführungsform der erfindungsgemäßen Reaktionseinrichtung mit einer physikalisch, biologisch und/oder chemisch aktiven bzw. durch exogene Einflüsse aktivierbaren Substanz beladen. Besonders bevorzugt ist dabei die Anordnung der physikalisch, biologisch und/oder chemisch aktiven bzw. aktivierbaren Substanz in wenigstens einem Teilbereich des zweiten Reaktionsraumes vorgesehen. Derartige aktive bzw. aktivierbare Substanzen sind beispielsweise enzymatisch aktive Substanzen, vorzugsweise Proteasen, Nukleasen oder dergleichen. Diese Substanzen können beispielsweise durch Gefrieren oder Gefriertrocknung inaktiviert sein und durch Kontakt mit einer Substanz, z.B. einer Flüssigkeit, in den aktiven Zustand übergeben. Es ist darüber hinaus auch jede weitere Form der enzymatischen Aktivität denkbar.

In einer weiteren Ausführungsform werden die pysikalisch, biologisch und/oder chemisch aktiven bzw. aktivierbaren Substanzen bzw. Materialien durch eine exogene Einflussnahme aktiviert, insbesondere ist ein zunächst schwach pysikalisch, biologisch und/oder chemisch aktives Material durch eine exogene Einflussnahme, wie beispielsweise die Zuführung von Wärme, Lichtenergie, elektrische oder magnetische Feldenergie, das Einbringen von Bewegungsenergie oder dergleichen aktivierbar.

In einer weiteren Ausführungsform weist das pysikalisch, biologisch und/oder chemisch aktivierbare Material Partikel eines magnetischen Materials auf, welche beispielsweise durch das Anbringen eines externen, rotierenden Magnetfeldes zu einer Bewegung innerhalb des zweiten oder eines anderen Reaktionsraumes angeregt werden, so dass hierdurch eine Vermischung der im zweiten Reaktionsraum befindlichen Substanzen erfolgt.

In einer besonders bevorzugten Ausführungsform ist in wenigstens einem der Reaktionsräume ein Dichtungselement angeordnet, welches einen Durchgang von Materialien oder Substanzen durch wenigstens einen Übergangsbereich zumindest teilweise behindert oder unterbindet.

Vorzugsweise besteht das Dichtungselement aus einem elastischen oder unelastischen Material, insbesondere einem Kunststoff. Das Dichtungselement wirkt beispielsweise bei der Anwendung einer Schmierkraft auf die Reaktionseinrichtung und die darin enthaltenen Materialen oder Substanzen nach Art eines Kugelventils mit dem Übergangsbereich zusammen.

Bei einer besonders bevorzugten Ausführungsform der vorliegenden Erfindung ist die Bodenfläche der Reaktionseinrichtung, und insbesondere des zweiten Reaktionsraumes, zumindest teilweise mit einem enzymatisch aktiven Material überdeckt.

Die erfindungsgemäße Reaktionseinrichtung weist vorzugsweise einen zumindest teilweise polygonförmigen, insbesondere rechteckigen, quadratischen, trigonalen, pentagonalen oder hexagonalen Querschnitt auf. Bei einer besonders bevorzugten Ausgestaltung weist die erfindungsgemäße Reaktionseinrichtung einen zumindest teilweise kreisförmigen oder eliptischen Querschnitt auf. Besonders bevorzugt ist die erfindungsgemäße Reaktionseinrichtung dabei zumindest teilweise hohl zylinderförmig ausgefügt, wobei die Zylinderwandungen unterschiedlich stark ausgeführt sein können, und gegebenenfalls mit zusätzlichen Elementen, wie beispielsweise Halteelementen, Verschlusselementen oder dergleichen versehen sein können.

Bei einer besonders bevorzugten Ausführungsform der vorliegenden Erfindung weist die Reaktionseinrichtung einen freien Querschnitt auf, durch welchen ein dritter Reaktionsraum mit dem ersten Reaktionsraum oder dem zweiten Reaktionsraum verbunden ist. Vorzugsweise wird der freie Querschnitt durch die Wandungen der Reaktionseinrichtung begrenzt und weist dadurch einen ebenfalls zumindest teilweise polygonförmigen bzw. kreis- oder elipsenförmigen Querschnitt auf.

Die begrenzenden Wandungen des freien Querschnittes sind dabei im Bereich des freien Querschnittes zumindest einseitig wenigstens teilweise schräg abgekantet. Die schräg abgekanteten Wandungen der Reaktionseinrichtungen können beispielsweise dazu verwandt werden, Teilbereiche von polymeren Matrixanordnungen, wie zum Beispiel Elektrophoresegelen, abzutrennen, insbesondere auszustecken, abzukanten oder zu durchtrennen.

In einer besonders bevorzugten Ausführungsform weist die Reaktionseinrichtung ein Abdeckelement auf, welches mit dem gegebenenfalls gefäßförmigen Unterteil der Reaktionseinrichtung lösbar verbunden ist, und zwar derart, dass es den freien Querschnitt des ersten Reaktionsraumes zumindest teilweise überdeckt. Vorzugsweise weist das Abdeckelement einen Querschnitt auf, der dem Querschnitt des Unterteils der Reaktionseinrichtung im wesentlichen entspricht, so dass das Abdeckelement auf das Unterteil der Reaktionseinrichtung aufgesetzt werden kann, um diese zu verschließen.

Die Wandungen des Abdeckelementes sind dabei vorzugsweise so ausgeführt, dass sie mit den Wandungen im Bereich des freien Querschnittes im wesentlichen formschlüssig verbindbar sind bzw. in diese eingreifen oder sie umgreifen.

Vorzugsweise sind die Wandungen des Abdeckelementes, ebenso wie die Wandungen der Reaktionseinrichtung zumindest teilweise schräg abgekantet. Besonders bevorzugt sind die Wandungen so ausgeführt, dass ein zwischen Reaktions- und Abdeckelement angeordnetes Stück eines hochviskosen Materials, wie beispielsweise einer Polymermatrix, insbesondere einem Elektrophoresegel, durch ein bloßes Aneinanderdrücken des Abdeckelementes und des Unterteiles der Reaktionseinrichtung, entweder abgeschert oder durchtrennt wird.

Zumindest in einem Teilbereich des Abdeckelementen ist wenigstens ein absorbierendes und/oder adsorbierendes Material angeordnet, welches einerseits der Aufnahme bzw. Absorption von Flüssigkeiten dient, andererseits der Adsorption von biologischen oder biochemischen Materialien, insbesondere Aminosäuren, Aminosäuresequenzen, Nukleotiden oder Nukleotidsequenzen dient. Besonders bevorzugt ist ein Teilbereich des Abdeckelementes aus einem derartigen absorbierenden und/oder adsorbierenden Material hergestellt.

Das absorbierende oder adsorbierende Material enthält beispielsweise Materialien, welche aus einer Gruppe ausgewählt sind, die Fleece, Zellulose, Superabsorber, Kohlenstoffverbindungen, Kohlenwasserstoffverbindungen, poröse Materialien, Mineralien, Salze sowie beliebige Kombinationen hiervon und dergleichen, enthält.

Bei einer besonders bevorzugten Ausführungsform der vorliegenden Erfindung ist das Abdeckelement mit der Reaktionseinrichtung lösbar verbunden, wobei das Abdeckelement beispielsweise durch ein Foliengelenk oder durch ein Scharnier mit der Reaktionseinrichtung verbunden sein kann. Besonders bevorzugt verschließt das Abdeckelement die Reaktionseinrichtung im verschlossenen Zustand im Bereich des freien Querschnittes vollständig, wobei das Abdeckelement nach der Durchführung der Reaktionen in der Reaktionseinrichtung vom Unterteil der Reaktionseinrichtung abgenommen bzw. abgetrennt werden kann, so dass der erste Reaktionsraum über den freien Querschnitt zur Umgebung hin geöffnet ist.

Besonders bevorzugt wird das Abdeckelement im verschlossenen Zustand der Reaktionseinrichtung durch ein Verriegelungselement am Unterteil der Reaktionseinrichtung gehalten, welches vorzugsweise am Außenbereich der Wandungen der Reaktionseinrichtung bzw. des Abdeckelementes angeordnet ist. Durch ein derartiges Verriegelungselement wird ein Lösen des Abdeckelementes vom Unterteil bei der Zentrifugation mit Beschleunigungen bis zu 100 G, vorzugsweise 200 G, vorzugsweise 500 G, vorzugsweise 1000 G, vorzugsweise 2000 G, vorzugsweise 5000 G, vorzugsweise 10000 G, vorzugsweise 20000 G verhindert. Die Befestigung des Abdeckelementes an der Reaktionseinrichtung kann außerdem durch eine form- und/oder kraftschlüssige Verbindung erfolgen, wobei das Abdeckelement, beispielsweise in das Unterteil der Reaktionseinrichtung eingesteckt ist, und durch die Zentrifugation der Kraftschluß in der Position verstärkt wird.

Bei einer besonders bevorzugten Ausführungsform der vorliegenden Erfindung ist zwischen dem Unterteil der Reaktionseinrichtung und dem Abdeckelement ein Konzentrationselement angeordnet, so dass zwischen dem Abdeckelement und dem Konzentrationselement ein vierter Reaktionsraum gebildet wird. Der Querschnitt des Konzentrationselementes entspricht zumindest teilweise dem Querschnitt des Unterteils der Reaktionseinrichtung und/oder des Abdeckelementes, wobei die Wandungen des Konzentrationselementes derart ausgeführt sind, dass sie mit den Wandungen des Unterteils und/oder den Wandungen des Abdeckelementes form- und/oder kraftschlüssig verbindbar sind. Hierbei sind die Wandungen des Konzentrationselementes wiederum derart ausgeführt, dass ein Abscheren oder Abtrennen eines hochviskosen Materials, insbesondere einer Polymermatrix und bevorzugt eines Elektrophoresegels zwischen den Wandungen des Konzentrationselementes und den Wandungen des Unterteils der Reaktionseinrichtung erfolgt.

In einer weiteren Ausführungsform ist das Konzentrationselement mit dem Unterteil und dem Abdeckelement, beispielsweise durch ein Foliengelenk oder ein Scharnier verbunden.

Das Konzentrationselement ist dabei an der Reaktionseinrichtung so zu befestigen, dass der dritte Reaktionsraum über den freien Querschnitt mit dem ersten Reaktionsraum der Reaktionseinrichtung verbunden ist. Das Abdeckelement und/oder das Konzentrationselement ist am Unterteil der Reaktionseinrichtung vorzugsweise durch eine lösbare Verriegelungseinrichtung derart gehalten, dass die Elemente, das heißt das Unterteil des Abdeckelementes, das Konzentrationselement und/oder der Reaktionseinrichtung auch bei einer Zentrifugation mit hohen Beschleunigungen nicht voneinander getrennt werden. Die Verbindung der Elemente kann bei einer weiteren Ausführungsform der vorliegenden Erfindung auch kraft- und/oder formschlüssig sein.

Besonders bevorzugt bilden die Elemente im miteinander verbundenen Zustand ein im wesentlichen geschlossenes Reaktionsgefäß, innerhalb dessen die Reaktionsräume durch Übergangsbereiche und oder- freie Querschnitte miteinander steif verbunden sind.

Das Konzentrationselement weist wenigstens einen zweiten Übergangsbereich auf, der vorzugsweise einen ebenfalls sich verjüngenden Querschnitt hat, welcher durch wenigstens ein bezüglich der Längsachse der Reaktionseinrichtung zumindest teilweise geneigt verlaufendes zweites Begrenzungselement begrenzt wird.

Besonders bevorzugt weist der zweite Übergangsbereich eine zumindest einseitig trichterförmige Gestalt auf. Besonders bevorzugt ist der zweite Übergangsbereich im wesentlichen konzentrisch im Konzentrationselement angeordnet, so dass das zweite Begrenzungselement im wesentlichen symetrisch zur Längsachse der Reaktionseinrichtung ausgeführt ist. In einer weiteren Ausführungsform ist der zweite Übergangsbereich im wesentlichen exzentrisch im Konzentrationselement angeordnet, so dass beispielsweise die Wandung des Konzentrationselementes zumindest teilweise als Begrenzungselement für den zweiten Übergangsbereich dient. Der minimale Querschnitt des zweiten Übergangsbereiches ist vorzugsweise kleiner als 500 Nanometer, kleiner als 1 Mikrometer, kleiner als 5 Mikrometer, kleiner als 10 Mikrometer, kleiner als 20 Mikrometer, kleiner als 50 Mikrometer, kleiner als 100 Mikrometer, kleiner als 200 Mikrometer, kleiner als 500 Mikrometer, kleiner als 1 Millimeter.

Durch das Verbinden des Abdeckelementes mit dem Konzentrationselement wird zwischen Abdeckelement und Konzentrationselement der vierte Reaktionsraum gebildet, welcher durch den zweiten Übergangsbereich mit dem dritten Reaktionsraum verbunden ist, so dass ein biologisches und/oder chemisches Material, insbesondere eine Flüssigkeit eine Lösung oder eine Suspension durch eine Krafteinwirkung durch den Übergangsbereich hindurch in den vierten Reaktionsraum befördert werden kann.

Bei einer besonders bevorzugten Ausführungsform der vorliegenden Erfindung ist zumindest in einem Teilbereich des zweiten Übergangsbereiches ein zweites absorbierendes und/oder adsorbierendes Material angeordnet, welches aus einer Gruppe ausgewählt ist, die Vlies, Zellulose, Superabsorber, Kohlenstoffverbindungen, Kohlenwasserstoffverbindungen, säulenchromatographisches Adsorbtionsmaterial, poröse Materialien, Mineralien, Salze und dergleichen, sowie beliebige Kombinationen hiervon, enthält.

Besonders bevorzugt ist der Bereich zwischen dem Unterteil und dem Konzentrationselement oder dem Unterteil um dem Abdeckelement als Verbindungsbereich ausgestaltet, der zum einen die Wandungen der einzelnen Elemente zumindest teilweise form- und/oder kraftschlüssig verbindet und zum anderen als Scher- bzw. Trennbereich, also als Bereich, in dem ein Teil eines Trägermaterials, in welchem die biologischen und/oder chemischen Materialen oder Substanzen aufgenommen sind, von dem gesamten Trägermaterial insbesondere einer polymermatrix wie beispielsweise einen Elektrophoresegel oder einen hochwirksamen Trägermaterial abgetrennt werden.

Bei einer bevorzugten Weiterbildung der vorliegenden Erfindung sind mehrere Reaktionseinrichtungen zu einem Reaktionsmodul verbunden. Vorzugsweise sind dabei mehrere Unterteile von Reaktionseinrichtungen einstückig miteinander verbunden und beispielsweise aus Teflon oder einem thermoplastischen oder duroplastischen Material, insbesondere Polypropylen, Polyethylen oder einem anderen bioverträglichen Material hergestellt. Die Reaktionseinrichtungen können dabei beispielsweise nach Art einer wabenförmigen Struktur oder nach Art einer zweidimensionalen Matrix angeordnet sein, wobei die Reaktionseinrichtungen hierbei vorzugsweise im wesentlichen hexagonalen Querschnitt bzw. einen im wesentlichen quadratischen Querschnitt aufweisen.

Bei einer weiteren Ausführungsform sind die Unterteile der Reaktionseinrichtungen nach Art einer Mikrotiterplatte ausgeführt, also als im wesentlichen kreisförmige Vertiefungen innerhalb eines Trägerelementes ausgeführt.

Ebenso wie die Unterteile der Reaktionseinrichtungen, sind bei derartigen Ausführungsformen auch die Konzentrationselemente bzw. die Abdeckelemente entsprechend der Anordnung der Unterteile der Reaktionseinrichtungen in Module zusammengefasst, welche eine Vielzahl von Konzentrationselementen bzw. Abdeckelementen aufweisen, und mit dem Modul, welches die Unterteile der Reaktionseinrichtungen aufweist kraft- und/oder formschlüssig verbindbar.

Auf diese Weise ist eine gleichzeitige bzw. parallele Verarbeitung einer Vielzahl von biologischen Materialien möglich.

Bei einer besonders bevorzugten Ausführungsform der vorliegenden Erfindung sind die Reaktionsmodule derart ausgestaltet, dass zwischen dem Modul, welches die Unterteile der Reaktionseinrichtungen aufweist, und dem Modul, welches die Konzentrationselemente aufweist, eine die zu analysierenden biologischen Materialien tragende polymere Matrix, insbesondere ein Elektrophoresegel, einlegbar ist, welche beim Zusammensetzen der Module des Reaktionsmodul durch die Wandungen der Reaktionseinrichtungen in Segmente geteilt wird, welche jeweils in den ersten Reaktionsräumen der einzelnen Reaktionseinrichtungen zum Liegen kommen.

Auf diese Weise kann eine parallele und vorzugsweise automatisierte Verarbeitung und/oder Analyse, beispielsweise kompletter Elektrophoresegele erfolgen.

Bei einer besonders bevorzugten Weiterbildung der vorliegenden Erfindung sind die einzelnen Reaktionseinrichtungen des Reaktionsmoduls derart lösbar miteinander verbunden, dass ein Abtrennen einzelner Reaktionseinrichtungen oder auch ganzer Segmente des Reaktionsmoduls, beispielsweise durch eine Sollbruchstelle, möglich ist.

Gemäß der vorliegenden Erfindung wird in einem ersten Verfahrensschritt zur Verarbeitung von biologischen Materialien ein biologisches Material in den ersten Reaktionsraum der Reaktionseinrichtung eingebracht, und die Reaktionseinrichtung sodann durch das Aufsetzen eines Abdeckelementes und/oder eines Konzentrationselementes verschlossen. Beim Einbringen des biologischen Materials in den ersten Reaktionsraum, befindet sich das biologische Material in einem ersten Zustand, beispielsweise in einem gefrorenen oder gefriergetrockneten Zustand oder in einer Polymermatrix, wie zum Beispiel einem Elektrophoresegel oder in einem Dichtegradienten, wie zum Beispiel in einem Glukosegradienten aufgenommen.

Nach dem Verschließen der Reaktionseinrichtung wird auf das in den ersten Reaktionsraum eingebrachte Material eine Kraft ausgeübt, welche zu einem Durchgang des Materials durch den ersten Übergangsbereich hindurch in den zweiten Reaktionsraum führt, wobei das Material dabei in einen zweiten Zustand, beispielsweise einen gelösten, einen flüssigen, separierten, zerkleinerten und/oder aus der Polymermatrix teilweise befreiten Zustand übergeht. Weitere mögliche Zustandsänderungen beim Übergang in den zweiten Reaktionsraum sind beispielsweise die Vergrößerung der Oberfläche, die Änderung der Ladung, der Reaktionsfähigkeit und/oder Prozessfähigkeit des Materials.

Vorzugsweise wirkt auf das biologische Material im zweiten Reaktionsraum ein biologisch, chemisch und/oder physikalisch aktives oder aktivierbares Material ein, wobei die Aktivität des aktiven Materials, gegebenenfalls beispielsweise durch die Zuführung von Temperatur, elektrischer und/oder magnetischer Feldenergie, Bewegungsenergie oder dergleichen gesteigert wird.

In einem weiteren Verfahrensschritt wird das biologische Material durch eine Krafteinwirkung durch den Übergangsbereich hindurch zurück in den ersten Reaktionsraum befördert. Vorzugsweise geht das Material dabei in einen dritten Zustand über.

Gemäß einer besonders bevorzugten Ausführungsform der vorliegenden Erfindung wird beim Übergang des biologischen Materials in den ersten Reaktionsraum eine Filtration durchgeführt, wobei hierbei vorzugsweise das biologisch, chemisch und/oder physikalisch aktive bzw. aktivierbare Material durch die an der Durchführung des ersten Begrenzungselementes angeordnete Poren-, Filter- oder Gitterstruktur zurückgehalten.

In einem weiteren, vorzugsweise mit dem vorherigen Verfahrensschritt verbundenen Verfahrensschritt geht das biologische Material durch die Krafteinwirkung durch den freien Querschnitt in den dritten Reaktionsraum über. In einem weiteren, gegebenenfalls mit dem vorherigen Verfahrensschritt verbundenen Verfahrensschritt geht das biologische Material durch den zweiten Übergangsbereich hindurch in den vierten Reaktionsraum über, wobei es dabei vorzugsweise in einen vierten Zustand übergeht. Besonders bevorzugt wird beim Durchgang des biologischen Materials durch den zweiten Übergangsbereich zumindest ein Teil des biologischen Materials durch ein erstes absorbierendes und/oder adsorbierendes Material absorbiert und/oder adsorbiert. Ein übriger Teil des Materials wird innerhalb des vierten Reaktionsraumes vorzugsweise von einem zweiten absorbierenden und/oder adsorbierenden Material absorbiert und/oder adsorbiert.

Vorzugsweise werden beim Durchtritt durch den zweiten Übergangsbereich Aminosäuren, Aminosäuresequenzen, Nukeinsäuren und/oder Nukleotidsequenzen, welche in dem biologischen Material enthalten sind, durch ein chromatographisches Material oder ein säulenchromatographisches Material, welches im zweiten Übergangsbereich angeordnet ist,gebunden.

Wenigstens ein Teil des absorbierenden oder adsorbierenden Materials wird durch das erste oder zweite absorbierende und/oder adsorbierende Material nach dem Öffnen des Reaktionsgefäßes und dem Trennen des Konzentrationselementes bzw. des Abdeckelementes von dem Unterteil der Reaktionseinrichtung durch ein polares oder unpolares Lösungsmittel, insbesondere ein Alkohol, gelöst und für eine nachfolgende Analyse, beispielsweise eine massenspektrographische Analyse oder eine Sequenzanalyse zur Verfügung gestellt.

Vorzugsweise erfolgt die Krafteinwirkung auf die biologischen Materialien bzw. Substanzen innerhalb der Reaktionseinrichtung durch Schwerkraft, insbesondere Zentrifugalkraft, mit einer Beschleunigung von vorzugsweise 500 G, vorzugsweise 1000 G, vorzugsweise 2000 G, vorzugsweise 5000 G, vorzugsweise 10000 G, vorzugsweise 20000 G oder durch Druck, Unterdruck oder osmotischen Druck, durch ein Kraftfeld, vorzugsweise ein elektrisches und/oder magnetisches Kraftfeld oder dergleichen.

Vorzugsweise wird die erfindungsgemäße Reaktionseinrichtung so angeordnet, dass die auf die biologischen Materialien oder Substanzen innerhalb der Reaktionseinrichtung angewandte Kraft zumindest teilweise in Richtung oder entgegen wenigstens einer Vorzugsrichtung der Reaktionseinrichtung wirkt.

Besonders bevorzugt erfolgt beim Einbringen eines biologischen Materials in den ersten Reaktionsraum eine gleichzeitige Trennung des biologischen Materials von einer Kombination vieler biologischer Materialien, vorzugsweise von einer ausgedehnten Matrix, insbesondere einem Elektrophoresegel oder dergleichen, welche eine Vielzahl von biologischen Materialien enthält.

Bei einer besonders bevorzugten Ausführungsform der vorliegenden Erfindung weist die Reaktionseinrichtung ein gefäßförmiges Unterteil auf, welches den ersten und zweiten Reaktionsraum sowie den ersten Übergangsbereich aufweist. Zusätzlich weist diese Reaktionseinrichtung einen Deckel bzw. ein Abdeckelement auf. Vorzugsweise ist der Deckel mit dem Unterteil, beispielsweise durch ein Foliengelenk oder ein Scharnier einstückig bzw. mehrstückig verbunden und weist den dritten oder einen beliebigen weiteren Reaktionsraum auf. Durch das Verbinden des Unterteils mit dem Deckel werden diese Reaktionsräume gegebenenfalls durch weitere Übergangsbereiche, welche im Unterteil und/oder im Deckel (Abdeckelement) angeordnet sind, miteinander verbunden.

Besonders bevorzugt sind Unterteil und Deckel der Reaktionseinrichtung dabei so ausgeführt, dass die Reaktionseinrichtung im zusammengesetzten Zustand eine im wesentlichen einer Symetrieebene symmetrische Außenkontur aufweist.

Die Reaktionseinrichtung hat, insbesondere im Falle einer derartigen symmetrischen Ausführung von Deckel und Unterteil wenigstens eine Vorzugsorientierung. Sie kann dadurch in wenigstens zwei bevorzugten Orientierungsrichtungen, nämlich entlang oder entgegen der Vorzugsorientierung beispielsweise in eine Aufnahmevorrichtung für Reaktionseinrichtungen, vorzugsweise einer Zentrifuge oder dergleichen eingebracht werden, so dass eine Schwerkraftwirkung In oder entgegen der Vorzugsorientierung auf die Reaktionseinrichtung oder die darin enthaltenen biologischen Materialien bzw. Substanzen ausgeübt werden kann.

Die erfindungsgemäße Reaktionseinrichtung weist außerdem wenigstens eine Komponente (Konzentrationselement) auf, durch die wenigstens ein weiterer, vorzugsweise dritter Reaktionsraum innerhalb der Reaktionseinrichtung definiert wird. Vorzugsweise steht der dritte Reaktionsraum über einen freien Querschnitt oder einen Übergangsbereich mit dem ersten oder zweiten Reaktionsraum in Verbindung.

Bei einer weiteren, besonders bevorzugten Ausführungsform steht der erste Reaktionsraum über eine Durchführung , welche ebenfalls innerhalb der Komponente angeordnet ist und gegebenenfalls durch weitere Begrenzungselemente oder Stege begrenzt wird, mit dem dritten Reaktionsraum in Verbindung. Vorzugsweise weist die Komponente und insbesondere die Durchführung einen Filter, ein poröses Material, eine Membran, ein gitterförmiges Element, einen Filter, ein trichterförmiges Element, eine Kapillare und/oder dergleichen auf.

Besonders bevorzugte Komponenten sind beispielsweise Pipettenspitzen, welche für die Verwendung mit laborüblichen Pipetten, automatischen Pipetten oder Eppendorf-Pipetten geeignet und vorgesehen sind. Hierbei kann die Pipettenspitze nach einem Öffnen der erfindungsgemäßen Reaktionseinrichtung insbesondere einem Abnehmen des Unterteils direkt auf die Pipette aufgesteckt und auf diese Weise aus dem Abdeckelement bzw. dem Deckel der Reaktionseinrichtung entfernt werden.

Besonders bevorzugt weist das Konzentrationselement bzw. die Pipettenspitze zumindest in ihrem Spitzenbereich einen ein poröses Material, eine Membran, ein trichterförmiges Element und/oder dergleichen auf, besonders bevorzugt weist die Pipettenspitze in ihrem Spitzenbereich ein absorbierendes und/oder adsorbierendes Material, insbesondere ein chromatographisches bzw. säulenchromatoprahisches Material oder ein Material, welches freie Kohlenwasserstoffverbindungen trägt, auf.

In einer besonders bevorzugten Ausführungsform weist die Pipettenspitze ein weiteres Begrenzungselement auf, welches in den Innenbereich der Pipettenspitze vorzugsweise symmetrisch zur Längsachse der Pipettenspitze hineinragt und durch das eine trichterförmige Durchführung gebildet wird, welche vorzugsweise zumindest teilweise mit einem Filter, einem gitterförmigen Element, einem Molekularsieb einem porösen Element, oder einem absorbierenden oder adsorbierenden Material versehen ist.

Besonders bevorzugt stellt der Spitzenbereich der Pipettenspitze bzw. des Konzentrationselementes einen zweiten Übergangsbereich dar, durch den der dritte Reaktionsraum mit dem vierten Reaktionsraum verbunden ist.

Vorzugsweise ist das Konzentrationselement bzw. die Pipettenspitze in ein entsprechend ausgeformtes Abdeckelement bzw. einen Deckel derart eingepasst, dass eine im wesentlichen form- und/oder kraftschlüssige Verbindung zwischen dem Konzentrationselement und dem Deckel der Reaktionseinrichtung besteht, welche im wesentlichen flüssigkeitsdicht ist und gegebenenfalls durch weitere Dichtelemente im Spitzenbereich der Pipettenspitze abgedichtet ist.

Besonders bevorzugt sind das Unterteil, der Deckel und die Komponente derart miteinander verbunden, dass ein einfaches Zusammenstecken bzw. Lösen der Verbindungen möglich ist. Insbesondere sind bei einer besonders bevorzugten Ausführungsform die Komponente, das Unterteil und der Deckel zumindest teilweise formschlüssig miteinander verbunden, oder greifen zumindest teilweise ineinander ein. Besonders bevorzugt weisen das Unterteil, der Deckel und/oder die Komponente im zusammengesetzten Zustand der Reaktionseinrichtung wenigstens eine gemeinsame, ineinander übergehende und/oder aneinander anschließende innere und/oder äußere Wandung auf.

In einer besonders bevorzugten Ausführungsform weist die Außenkontur der Reaktionseinrichtung in ihren Spitzenbereichen Vorsprünge bzw. Ausbuchtungen auf, welche beispielsweise mit einer Halteeinrichtung einer Aufnahmeeinrichtung für Reaktionseinrichtungen oder einer automatisierten Greifeinrichtung derart zusammenwirken, dass ein unkontrolliertes bzw. ungewolltes Lösen der Reaktionseinrichtung aus der Aufnahmeeinrichtung oder der Greifeinrichtung vermieden werden kann.

Besonders bevorzugt ist die Komponente in das Abdeckelement bzw. den Deckel derart eingesteckt, dass die Komponente sich im wesentlichen vollständig in den Deckel hineinerstreckt und dabei Vorsprünge bzw. Stufen an der Außenkontur der Komponente bzw. Pipettenspitze mit diesen gegenüberstehenden Stufen oder Schultern an der Innenkontur des Deckels derart zusammenwirken, dass ein weiteres Eindringen der Komponente oder Pipettenspitze in den Deckel bzw. das Abdeckelement auch bei Anwendung hoher Preß- oder Schwerkräfte vermieden wird und ein nachfolgendes Lösen der Komponente, insbesondere Herausziehen der Pipettenspitze aus dem Abdeckelement gewährleistet ist.

In einer weiteren Ausführungsform wird die Verbindung zwischen dem Unterteil, dem Deckel und/oder der Komponente durch eine Halteeinrichtung fixiert, welche gewährleistet, dass das Unterteil, der Deckel und/oder die Komponente auch bei Anwendung hoher Zugkräfte nicht unkontrolliert und ungewünscht voneinander getrennt werden. Besonders bevorzugt ist die Halteeinrichtung so ausgeführt, dass sie beispielsweise an einer Sollbruchstelle durch eine vorgegebene Quer- oder Biegebelastung durchbrochen werden kann, oder aber durch ein leicht zu öffnendes Verriegelungselement fixiert ist.

Besonders bevorzugt ist das erste Begrenzungselement mit der Wandung des Unterteils der Reaktionseinrichtung einstückig ausgeführt, in einer weiteren Ausführungsform ist das erste Begrenzungselement mit der Wandung des Unterteils stoff- und/oder kraftschlüssig verbunden.

In einer erfindungsgemäßen Reaktionsvorrichtung gemäß der vorliegenden Erfindung sind eine Vielzahl von Reaktionseinrichtungen gemäß der vorliegenden Erfindung aufgenommen, wobei durch die Reaktionsvorrichtung eine Kraft auf die Reaktionseinrichtungen und/oder die darin enthaltenen Substanzen bzw. Materialien übertragen wird, insbesondere eine Schwerkraft, Zentrifugalkraft, Zentripetalkraft, eine magnetische und/oder elektrische Kraft, Druck oder Unterdruck, so dass die in den Reaktionseinrichtungen enthaltenen Substanzen zwischen den Reaktionsräumen der jeweiligen Reaktionseinrichtungen bewegt werden können und dabei durch die Übergangsbereiche zwischen den Reaktionsräumen hindurch befördert werden.

Vorzugsweise werden hierbei Teile des biologischen Materials oder der biologischen Materialien und/oder Substanzen durch entsprechend ausgeführte Strukturen der Übergangsbereiche, wie beispielsweise absorbierende und/oder adsorbierende Materialien gebunden und/oder aufgenommen oder aber deren Zustand durch diese Strukturen der Übergangsbereiche verändert.

In einer besonders bevorzugten Ausführungsform wird die Reaktionseinrichtung nach dem einbringen der biologischen Materialien in den ersten Reaktionsraum zunächst in einer ersten Vorzugsorientierung in den Läufer einer Zentrifuge eingebracht und nach erfolgter Zentrifugation und gegebenenfalls nach einer vorgegebenen Inkubationszeit in einer zweiten Vorzugsorientierung, vorzugsweise in einer bzgl. einer Symmetrieachse bzw. -eben inversen Richtung in den Läufer einer Zentrifuge eingebracht.

In besonders bevorzugten Weiterbildungen der erfindungsgemäßen Reaktionseinrichtung werden in die Reaktionseinrichtung weitere Komponenten, wie beispielsweise Filter, poröse Materialien, Membranen, Gehäuseabschnitte, Begrenzungselemente, Trennbereiche, Übergangsbereiche und/oder dergleichen eingebracht, welche zu einer weiteren Unterteilung der Reaktionseinrichtung in weitere Reaktionsräume führen. Auf diese Weise können ganze Reaktionskaskaden durch Staffelung der Art, Stärke und gegebenenfalls auch der Richtung der Krafteinwirkung durchlaufen werden, die es erlauben auch komplizierte Reaktionsabläufe mit mehreren Verfahrensschritten in einer Reaktionseinrichtung durchzuführen.

Zwischen den unterschiedlichen Reaktionsräumen besteht dabei eine Verbindung, welche bevorzugt so ausgelegt ist, dass eine Wechselwirkung der in die Reaktionseinrichtung eingebrachten Substanzen mit der Reaktionseinrichtung oder in der Reaktionseinrichtung vorhandenen Substanzen oder Materialien erfolgen kann, die zu einer Reinigung, Konzentrierung, Trennung, Verarbeitung, Reaktion, Mischung, Homogenisierung, Modifikation und/oder zu einer anderweitig gewünschten Veränderung der Eigenschaften der eingebrachten Substanzen führt.

Bei einer besonders bevorzugten Ausführungsform der vorliegenden Erfindung sind wenigstens zwei äußere Wandungen wenigstens zweier erfindungsgemäßer Reaktionseinrichtungen einstückig miteinander verbunden, so dass hierdurch eine Anordnung (Reaktionsmodul), vorzugsweise eine matrixartige Anordnung mehrerer Reaktionseinrichtungen entsteht.

Auf diese Weise besteht die Möglichkeit, in einer Vielzahl von Reaktionseinrichtungen eine Vielzahl von Reaktionsschritten parallel ablaufen zu lassen. Bei einer derartigen Anordnung mehrerer Reaktionseinrichtungen werden die Vorzugsorientierungen der Reaktionseinrichtungen vorzugsweise im wesentlichen gleich angeordnet.

Das Einbringen einer derartigen Anordnung mit wenigsten zwei Vorzugsorientierungen in eine Aufnahme ermöglicht somit ebenso, wie im Falle der einzelnen Reaktionseinrichtung beschrieben, die gleichzeitige, zeitlich- und/oder räumlich versetzte Durchführung von Reaktionsabläufen in einer Anordnung von Reaktionseinrichtungen, welche beliebig komplex unterstrukturiert ausgelegt werden können.

Weitere Vorteile und Anwendungsmöglichkeiten der vorliegenden Erfindung werden nachfolgend anhand von Ausführungsbeispielen mit Bezug auf die Figuren dargestellt.

Die Ausführungsbeispiele sind nicht als Einschränkung der Erfindung zu verstehen. Vielmehr sind im Rahmen der Beschreibung der Ausführungsbeispiele auch solche Varianten, Elemente und Kombinationen als offenbart anzusehen, die sich durch eine Kombination oder Abwandlung von einzelnen, in der allgemeinen Beschreibung, den Ausführungsbeispielen, den Ansprüchen oder den Zeichnungen enthaltenen Merkmalen ergeben, und man diese Merkmalskombinationen oder Abwandlungen nicht ausdrücklich in einem Ausführungsbeispiel gezeigt bzw. beschrieben sind und gegebenenfalls zu einem geänderten Gegenstand oder zu neuen Verfahrensschritten bzw. einer neuen Abfolge von Verfahrensschritten führen.

Es sei außerdem ausdrücklich darauf hingewiesen, dass die Figuren lediglich schematische Darstellungen der erfindungsgemäßen Reaktionseinrichtungen und -Module zeigen und ihnen daher keine Offenbarungsgehalt beschränkenden Merkmale hinsichtlich Form, Größe und Ausgestaltung einzelner Elemente oder von Elementkombinationen entnommen werden kann.

Es zeigen:
- Fig. 1:: eine schematische Darstellung einer Reaktionseinrichtung im Querschnitt;
- Fig. 2:: eine schematische Darstellung einer alternativen Ausführungsform einer Reaktionseinrichtung im Querschnitt;
- Fig. 3:: eine schematische Darstellung eines Reaktionsmoduls im Querschnitt;
- Fig. 4a:: eine Detailansicht des Verbindungsbereiches A einer Reaktionseinrichtung gemäß Figur 1 während eines Trennprozesses einer Polymermatrix;
- Fig. 4b:: eine Detailansicht einer alternativen Ausführungsform des Verbindungsbereiches A einer Reaktionseinrichtung gemäß Figur 1 während eines Trennprozesses einer Polymermatrix;
- Fig. 4c:: eine Detailansicht einer weiteren alternativen Ausführungsform des Verbindungsbereiches A einer Reaktionseinrichtung gemäß Figur 1 während eines Trennprozesses einer Polymermatrix;
- Fig. 4d:: eine Detailansicht der Ausführungsform eines Verbindungsbereiches A gemäß Figur 4c nach der Durchführung des Trennprozesses einer Polymermatrix;
- Fg. 5:: eine schematische Darstellung einer erfindungsgemäßen Reaktionseinrichtung im Querschnitt;
- Fig. 6:: eine schematische Darstellung einer weiteren Ausführungsform einer Reaktionseinrichtung gemäß der vorliegenden Erfindung im Querschnitt;
- Fig. 7:: eine schematische Darstellung einer alternativen Ausführungsform eines Reaktionsmoduls;
- Fig. 8:: eine schematische Darstellung einer weiteren alternativen Ausführungsform eines Reaktionsmoduls;
- Fig. 9:: eine schematische Darstellung einer alternativen Ausführungsform einer Reaktionseinrichtung.

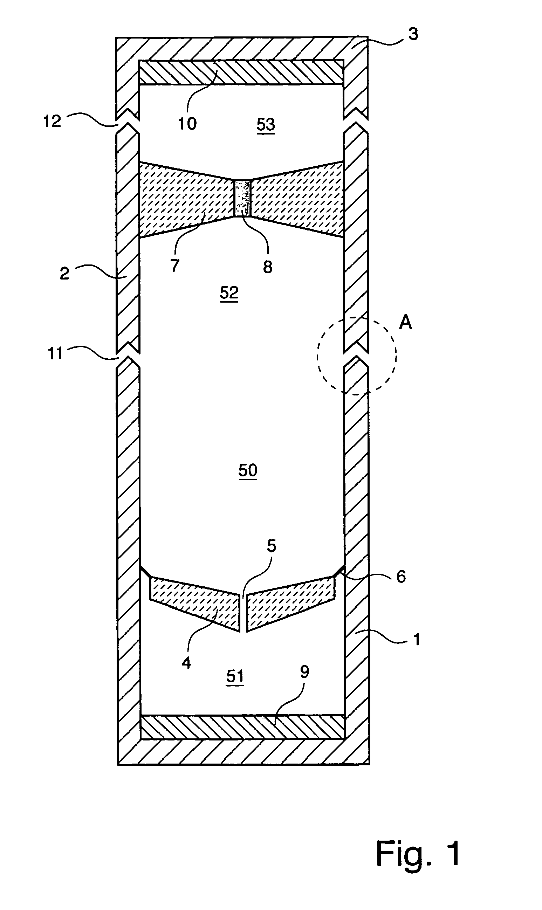

Fig. 1 zeigt schematisch einen Querschnitt einer Ausführungsform einer Reaktionseinrichtung bestehend aus einem Unterteil 1, einem Konzentrationselement 2 und einem Abdeckelement 3.

Gemäß einer Ausführungsform weist eine solche Einrichtung eine im wesentlichen zylindrische Grundform auf, wobei die Einzelelemente/Teile an den Verbindungsbereichen 11 und 12 miteinander formschlüssig verbindbar sind.

Gemäß einer Ausführungsform sind die Verbindungsbereiche über eine sogenannte Nut- und Federverbindung geführt, und können im Bedarfsfall mittels einem Verbindungselement (nicht dargestellt) kraftschlüssig verbunden werden.

Gemäß Figur 1 weist das Unterteil der Reaktionseinrichtung 1 ein Begrenzungselement 4 auf, das beispielsweise über Stege mit der inneren, seitlichen Wandung des Unterteils verbunden ist. Gemäß einem besonders bevorzugten Ausführungsbeispiel weist das Begrenzungselement 4 ferner einen ersten Übergangsbereich 5 auf, der sich gemäß Fig. 1 im wesentlichen parallel zur Längsachse der Reaktionseinrichtung erstreckt.

In einem Ausführungsbeispiel ist in dem Zwischenraum zwischen dem Begrenzungselement 4 und der Innenkontur der seitlichen Wandung 1 eine Durchführung 6, welche vorzugsweise ein gitter- oder porenförmiges Element aufweist, angeordnet, das zumindest in eine Richtung den Durchgang von Fluiden und/oder biologischen Materialien, insbesondere Proteinen, mit einer vorgegebenen molekularen Masse ermöglicht.

Das Begrenzungselement 4 definiert einen ersten Reaktionsraum 50, der sich gemäß Fig. 1 im wesentlichen überhalb dieses Begrenzungselementes erstreckt, und welcher durch den ersten Übergangsbereich 5 mit einem zweiten Reaktionsraum 51 verbunden ist.

Der zweite Reaktionsraum weist gemäß einem besonders bevorzugten Ausführungsbeispiel im Bodenbereich 9 ein biologisch, physikalisch und/oder chemisch aktives oder aktivierbares Material auf, welches beispielsweise mit einem durch den ersten Übergangsbereich zugeführten biologischen Material in Wechselwirkung treten kann.

Gemäß einem besonders bevorzugten Ausführungsbeispiel werden im Bodenbereich des zweiten Reaktionsraumes ein oder mehrere aktive und/oder aktivierbare Materialen angeordnet, welche vorzugsweise Proteasen, Nukleasen oder dergleichen enthalten.

Um optimale Reaktionsbedingungen für beispielsweise eine enzymatische Reaktion mit einem biologischen Material zu erreichen, können neben diesen aktiven oder aktivierbaren Materialen weitere, die Reaktionsbedingungen erholende oder, Reaktionsgeschwindigkeit erhöhende Materialien wie beispielsweise Puffer oder Mediatoren und/oder Katalysatoren vorhanden sein.

Gemäß eines besonders bevorzugten Ausführungsbeispiels schließt sich an das Unterteil 1 ein Konzentrationselement 2 an, welches den ersten Reaktionsraum 50 des Unterteils 1 um einen weiteren, dritten Reaktionsraum 52 erweitert und welches ein zweites Begrenzungselement 7 aufweist, das gemäß eines besonders bevorzugten Ausführungsbeispieles einen zweiten Übergangsbereich 8 aufweist, der sich im wesentlichen parallel zur Längsachse der Reaktionseinrichtung erstreckt.

Gemäß einem besonders bevorzugten Ausführungsbeispiel weisen die Begrenzungselemente eine trichterförmige Grundform auf, wobei in Strömungsrichtung betrachtet, am tiefsten Punkt des Trichter die jeweiligen Übergangsbereiche angeordnet sind.

Somit dient der Übergangsbereich 5 als Strömungspfad bei dem dargestellten Ausführungsbeispiel vom ersten in den zweiten Reaktionsraum. Ferner verbindet die Durchführung 6 als Strömungspfad den zweiten Reaktionsraum 51 mit dem ersten Reaktionsraum 50 um die Rückführung des biologischen Materials oder dessen Bestandteile zu ermöglichen. Des weiteren ist der erste Reaktionsraum 50 mit dem dritten Reaktionsraum 52 durch den freien Querschnitt verbunden und der dritte Reaktionsraum durch den zweiten Übergangsbereich 8 mit dem vierten Reaktionsraum.

Die Reaktionseinrichtung wird gemäß Figur 1 durch das Abdeckelement 3 verschlossen. Hierdurch ist im Anschluß an das Begrenzungselement 7 der vierte Reaktionsraum 53 definiert, der einen Bereich aufweist, in welchem beispielsweise ein absorbierendes oder adsorbierendes Material 10 angeordnet ist.

Besonders bevorzugt wird die Strömungsrichtung durch die Wirkung einer Schwerkraft, insbesondere Zentrifugalkraft vorgegeben. Die ersten und zweiten Begrenzungselemente sind vorzugsweise einstückig mit den Wandungen der Reaktionseinrichtung verbunden oder mit diesen beispielsweise durch Klebung stoffschlüssig verbunden oder aber form- und/oder kraftschlüssig in diese eingesetzt.

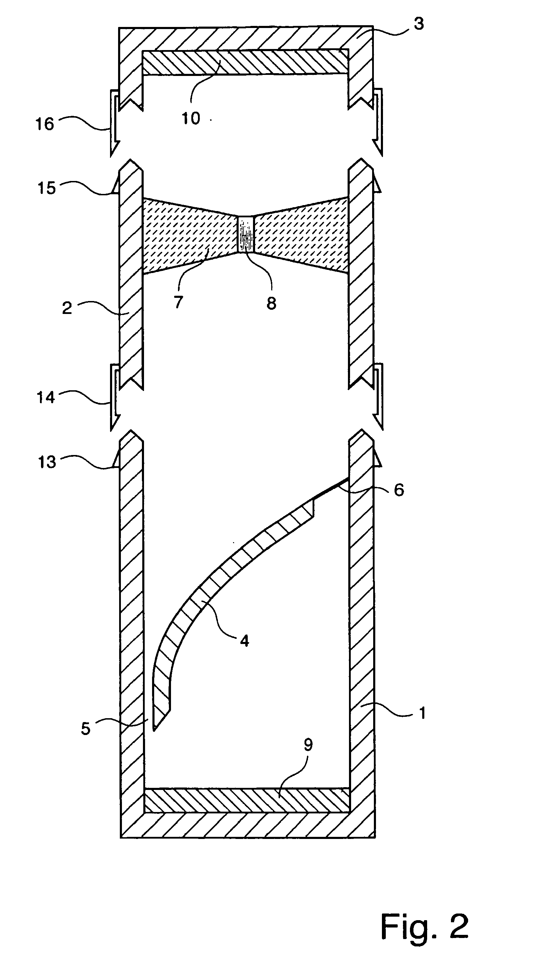

Figur 2 zeigt eine alternative Ausführungsform für eine Reaktionseinrichtung. Gemäß diesem Ausführungsbeispiel befindet sich der erste Übergangsbereich 5 zwischen dem ersten Reaktionsraum 50 und dem zweiten Reaktionsraum 51 an einer bezüglich der Längsachse der Reaktionseinrichtung exzentrisch angeordneten Position, welche in Strömungsrichtung zwischen erstem und zweitem Reaktionsraum am tiefsten Punkt des ersten Reaktionsraumes angeordnet ist. Betrachtet man die Strömungsrichtung vom zweiten Reaktionsraum in den ersten Reaktionsraum, so befindet sich gemäß Fig. 2 auf der rechten Seite eine nicht beanspruchte Durchführung 6, welche ein gitterförmiges oder poröses Material oder ein Trennelement aufweist.

Gemäß einer Ausführungsform erstrecken sich der Übergangsbereich 5 gemäß Fig. 2 über eine vorgegebene Länge entlang der inneren Wandung der Reaktionseinrichtung.

Ferner ist das Begrenzungselement 4 mit der Innenwandung der Reaktionsreinrichtung in der Art und Weise verbunden, dass eine Fluidverbindung zwischen dem ersten und zweiten Reaktionsraum bevorzugt nur in Strömungsrichtung durch den Übergangsbereich 5 erfolgt wobei das Begrenzungselement derart mit den Wandungen der Reaktionseinrichtung verbunden ist, dass es auch bei hohen Beschleunigungskräften wie sie beispielsweise in einer Zentrifuge auftreten nicht zu einer wesentlichen Veränderung bzw. Verformung der Übergangsbereiche und insbesondere deren Querschnitte führt.

Gemäß Figur 2 sind die Elemente der Reaktionseinrichtung mit zusätzlichen Verriegelungselementen 14 und 13 bzw. 16 und 15 versehen, welche sicherstellen, dass eine ungewollte Trennung der Elemente beispielsweise während einer Zentrifugation verhindert wird. Gemäß einer besonders bevorzugten Ausführungsform ist dies beispielsweise ein Haken 14, 16, der den Vorsprung 13, 15 hintergreift.

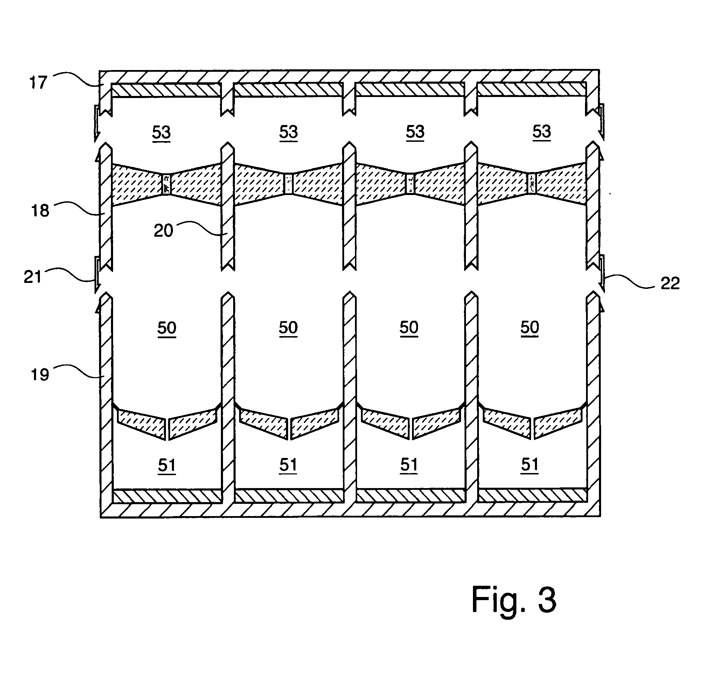

Figur 3 zeigt schematisch ein Reaktionsmodul, bei dem mehrere Reaktionseinrichtungen in einer zweidimensionalen Matrix angeordnet sind.

Es liegt im Sinne der vorliegenden Erfindung, dass die Zahl der Reaktionseinrichtungen, insbesondere den Erfordernissen der Untersuchungsmethode angepaßt werden kann, wobei insbesondere auch die Zahl der Reaktionseinrichtung, die hintereinander angeordnet werden (nicht dargestellt), verändert bzw. angepasst werden kann.

Die Reaktionseinrichtungen gemäß Figur 3 weisen erste Reaktionsräume 50, zweite Reaktionsräume 51 und vierte Reaktionsräume 53 auf, welche durch die Begrenzungswände 17, 18 und 19 voneinander flüssigkeitsdicht getrennt sind, wobei die Verriegelungsvorrichtungen 21, 22 ein versehentliches Trennen der Einzelmodule des Reaktionsmoduls verhindert bzw. die Module des Reaktionsmoduls form- und/oder kraftschlüssig verbindet.

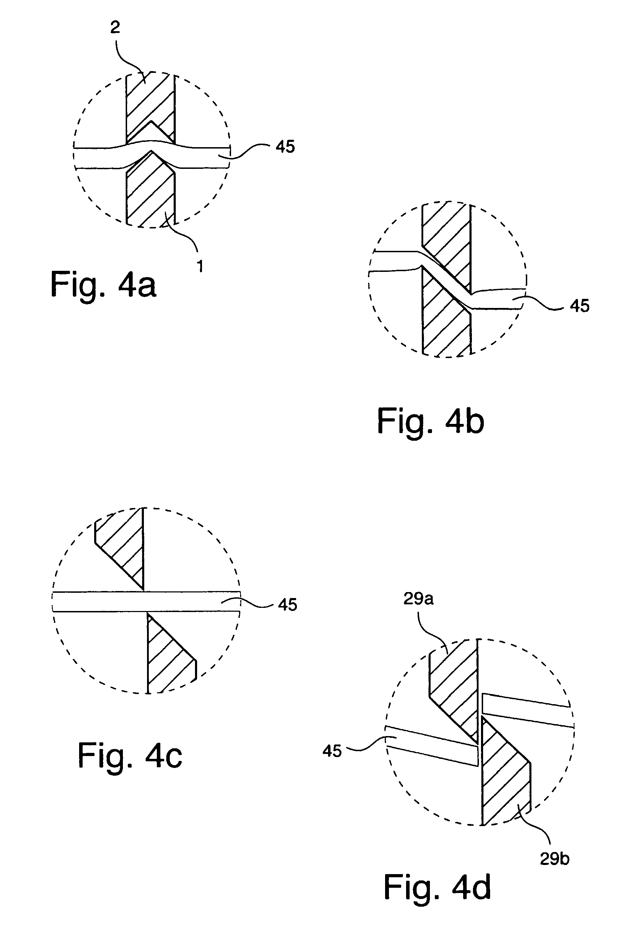

Figur 4a zeigt eine bevorzugte Ausführungsform der Wandungen einer erfindungsgemäßen Reaktionseinrichtung im Bereich des freien Querschnittes d. h. im Verbindungsbereich A gemäß Figur 1, wobei neben den Wandungen 1 und 2 auch ein Teilstück 45 eines biologischen Materials oder eines Materials, in welchem ein oder mehrere biologische Materialien aufgenommen sind (Trägermaterial), vorzugsweise eine Polymermatrix im Querschnitt dargestellt ist. Beim Zusammenfügen der Wandungen des Unterteils und des Konzentrationselementes der Reaktionseinrichtung wird durch die Trennwirkung der dargestellten Wandungen das biologische Material oder das Trägermaterial geteilt.

Gemäß einer besonders bevorzugten Ausführungsform, dient insbesondere die matrixförmige Anordnung mehrerer Reaktionseinrichtungen (Reaktionsmodul) dazu, dass eine flächige Probe wie z. B. eine Gelplatte so über den ersten Reaktionsräumen des unteren Moduls eines Reaktionsmoduls angeordnet werden kann, dass durch Aufsetzen die Konzentrationselemente oder die Abdeckelemente tragenden mittleren bzw. oberen Moduls jedem Reaktionsraum ein entsprechendes Teilstück bzw. ein Teilbereich der flächigen Probe fest zugeordnet wird. Gemäß dieser Ausführungsform ist es möglich, ohne eine langwierige Teilung einer ausgedehnten oder flächigen Probe gegebenenfalls automatisiert und/oder parallel eine Vielzahl von Untersuchungen, Analysen, Trennprozessen oder KOnzentrationsprozessen durchzuführen.

Figur 4b, 4c und 4d zeigen alternative Ausführungsformen des Verbindungsbereiches A, wobei weitere Möglichkeiten eines Trennvorgangs einer flächigen Probe 45 wiedergegeben sind. Hierbei wird durch Zusammenführen der einzelnen Elemente z. B. des Konzentrationselementes und des Unterteils bzw. des unteren und des mittleren Moduls das Probenmaterial an der Schnittkante zwischen den Wandungen 1, 29a und 2, 29b getrennt.

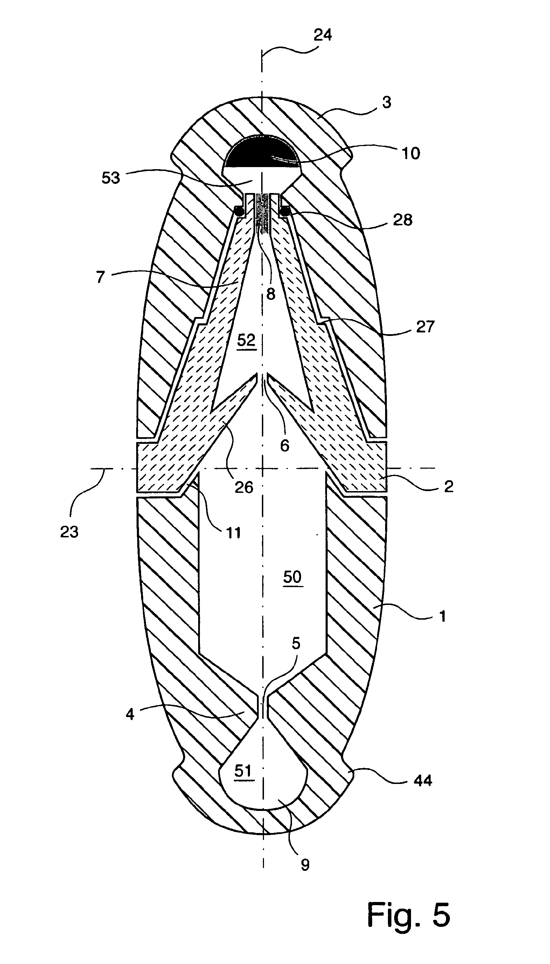

Figur 5 zeigt eine alternative Ausführungsform einer Reaktionseinrichtung gemäß der vorliegenden Erfindung. Hierbei ist die Reaktionseinrichtung, insbesondere durch ihren rotationssymetrischen Aufbau entlang der Achse 24 sowie durch ihre im wesentlichen zur Achse bzw. Ebene 23 symmetrische Außenkontur gekennzeichnet. Gemäß dem hier dargestellten Ausführungsbeispiel besteht eine derartige Reaktionseinrichtung aus drei Elementen, wobei das Unterteil 1 den ersten Reaktionsraum 50 und den zweiten Reaktionsraum 51 aufweist. Erster und zweiter Reaktionsraum sind durch den Übergangsbereich 5 miteinander verbunden.

Das Konzentrationselement ist gemäß dem hier dargestellten Ausführungsbeispiel so aufgeführt, dass es als Pipettenspitze verwendbar ist, d. h. von laborüblichen Pipetten, automatischen Pipetten, wie beispielsweise Eppendorf-Pipetten aufgenommen und mit diesen verwendet werden kann. Dieses Konzentrationselement weist eine Durchführung 6 auf, welche durch die Verbindungsstege 26 mit der Basis des Konzentrationselements 2 verbunden ist. Die Durchführung 6 mündet in den dritten Reaktionsraum 52, der seinerseits durch den Übergangsbereich 8 mit dem vierten Reaktionsraum 53 verbunden ist.

Gemäß einer besonders bevorzugten Ausführungsform weisen die Durchführung 6 und der Übergangsbereich 8 zumindest in Teilbereichen Materialien auf, die eine Trennung, Filtration, Absorbtion, Adsorbtion oder ein Zurückhalten von vorgegebenen, insbesondere Materialien oder Substanzgemischen aufgrund ihrer molekularen Struktur oder Masse, ihrer Ladung oder Ladungsverteilung oder dergleichen, erlauben.

Der vierte Reaktionsraum 53 ist gemäß dem vorliegenden Ausführungsbeispiel im Abdeckelement 3 der Reaktionseinrichtung angeordnet. Vorzugsweise sind die zweiten Begrenzungselemente 7 die Wandungen der Pipettenspitze.

Um eine flüssigkeitsdichte Verbindung zwischen dem Konzentrationselement, d. h. der Pipettenspitze 2 und dem Abdeckelement 3 zu gewährleisten, ist gemäß dem hier dargestellten Ausführungsbeispiel ein Dichtungselement 28 im vorderen Bereich der Pipettenspitze zwischen Pipettenspitze und Abdeckelement angeordnet. Vorzugsweise wir hierdurch die Pipettenspitze form- und/oder Kraftschlüssig innerhalb des Abdeckelementes gehalten.

Gemäß einem besonders bevorzugten Ausführungsbeispiel ist die Innenkontur der Wandungen des Abdeckelementes an die Außenkontur der Pipettenspitze bzw. des Konzentrationselementes insoweit angepasst. Hierdurch werden insbesondere Kräfte, die beispielsweise beim Zentrifugieren auf die Elemente und insbesondere auch auf die Pipettenspitze wirken, aufgenommen und auf das Abdeckelement bzw. den Läufer der Zentrifuge übertragen. Besonders bevorzugt sind die Außenkonturen des Konzentrationselementes 2 bzw. der Pipettenspitze so ausgeführt, dass sie mit der Innenkontur des Abdeckelementes 3 formschlüssig verbunden sind und insbesondere die Stufe 27 der Pipettenspitze an einem ihr gegenüberliegen Vorsprung der Innenkontur des Abdeckelementes 3 anliegt.

Gemäß Fig. 5 weist das Unterteil 1 und/oder das Abdeckelement der Reaktionseinrichtung an seiner Außenkontur Vorsprünge 44 auf, welche beispielsweise mit einem Befestigungsmechanismus in einer Halteeinrichtung für Reaktionseinrichtungen, vorzugsweise einem Läufer einer Zentrifuge oder einem automatisierten Greifsystem derart wechselwirken, dass hierdurch ein Herausfallen oder Lösen der Reaktionseinrichtung von der Halteeinrichtung vermieden werden kann.

Die ersten Begrenzungselemente der Reaktionseinrichtung gemäß Fig. 5 sind mit den Wandungen des Unterteils vorzugsweise einstückig ausgeführt oder aber mit diesen kraft-und/oder stoffschlüssig verbunden.

Ferner sei darauf hingewiesen, dass die dargestellten Größenverhältnisse der Reaktionseinrichtung, insbesondere die Größen der Reaktionsräume an die Volumina der zu untersuchenden biologischen Materialien angepasst sind.

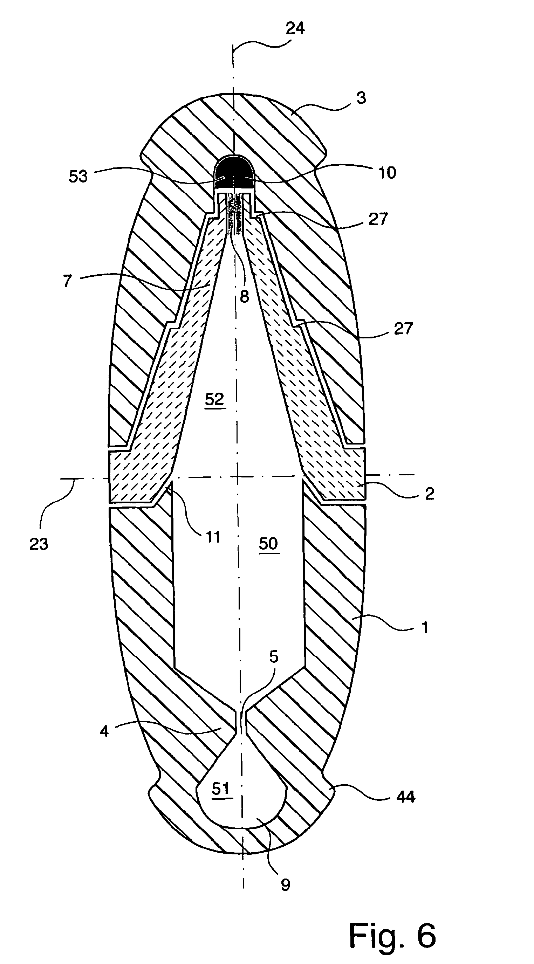

Figur 6 zeigt eine alternative Ausführungsform einer symmetrischen Reaktionseinrichtung, welche aus drei Elementen besteht. Im Unterteil 1 sind der erste Reaktionsraum 50, der erste Übergangsbereich 5 und der zweite Reaktionsraum 51 angeordnet. Im zweite Reaktionsraum 51 ist zumindest in einem Teilbereich ein aktives und/oder aktivierbares Material, vorzugsweise ein Material, welches Enzyme enthält angeordnet, welches nach der Beförderung des biologischen Materials in den zweiten Reaktionsraum mit diesem in Wechselwirkung tritt.

Gemäß dem hier dargestellten Ausführungsbeispiel geht der erste Reaktionsraum 50 im Bereich der Symmetrieebene bzw. Achse 23 über einen freien Querschnitt in den dritten Reaktionsraum 52 über. Dieser Reaktionsraum 52 wird im wesentlichen durch den Innenbereich einer Pipettenspitze gebildet, welche ihrerseits zu einem wesentlichen Teil im Abdeckelement 3 der Reaktionseinrichtung aufgenommen ist.

Im Spitzenbereich der Pipettenspitze ist gemäß der vorliegenden Ausführungsform ein zweiter Übergangsbereich vorgesehen, in dem gemäß einer besonders bevorzugten Ausführungsform zumindest in einem Teilbereich ein Material angeordnet ist, welches durch Absorbtion- oder Adsorbtion wenigstens einen Bestandteil des biologischen Materials absorbiert oder adsorbiert. Über den Übergangsbereich 8 mündet der dritte Reaktionsraum 52 in den vierten Reaktionsraum 53.

Gemäß einer bevorzugten Ausführungsform ist das Abdeckelement 3 in seiner Innenkontur der Außenkontur des Konzentrationselementes, d.h. der Pipettenspitze weitgehend angepasst, wobei die Schultern 27 vorzugsweise an Vorsprüngen der inneren Kontur des Abdeckelementes anliegen und wobei in Abhängigkeit der zu erwartenden Kräfte, welche auf die Elemente wirken, die Auflagefläche zwischen den Elementen vorgegeben ist.

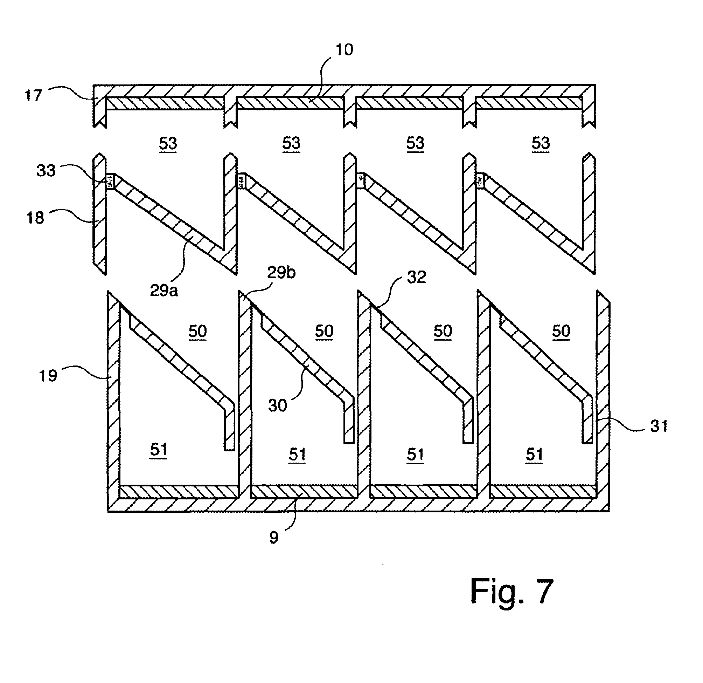

Figur 7 zeigt eine alternative Ausführungsform eines Reaktionsmoduls. Hierbei ist insbesondere das mittlere 18 und das untere Modul 14 so ausgeführt, dass beim Zusammensetzen der Module ein versetztes ineinander Eingreifen der Wandungen 29a, 29b der Module erfolgt, so dass die in den Figuren 4c und 4d beschriebene Trennung einer flächigen oder matrixförmigen Probe durch die Stege bzw. Wandungen 29a, 29b erfolgt.

Gemäß der hier dargestellten Ausführungsform weisen die Reaktionsmodule erste Reaktionsräume 50, zweite Reaktionsräume 51 und vierte Reaktionsräume 53 auf. Die Reaktionsräume sind im geschlossenen bzw. zusammengesetzten Zustand des Reaktionsmoduls durch die Übergangsbereiche 31, 33 und die Durchführung 32 miteinander verbunden. Die Übergangsbereiche und die Durchführung weisen zumindest in einem Teilbereich ein gitter- oder porenförmiges Element und/oder ein Ab- bzw. Adsorbtionsmaterial auf.

In den Unterteilen 19 bzw. den Abdeckelementen 7 ist gemäß der hier dargestellten Ausführungsform vorzugsweise in einem Teilbereich des 2. bzw. 4. Reaktionsraumes ein aktives oder aktivierbares Material 9 bzw. ein Absorbtionsmaterial 10 angeordnet.

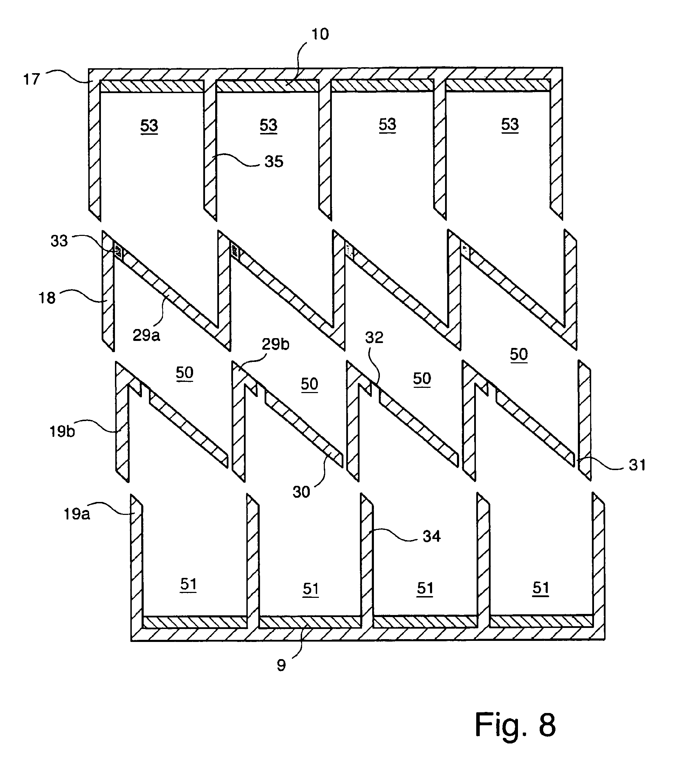

Figur 8 zeigt eine weitere Ausführungsform eines Reaktionsmoduls, bei dem das die Unterteile der einzelnen Reaktionseinrichtungen aufweisenden Modul 19 zweiteilig aufgeführt ist. Hierbei weist das untere Teilelement 19a die zweiten Reaktionsräume 19a auf, in welchem zumindest Bereichsweise ein biologisch, physikalisch und/oder chemisch aktives und/oder aktivierbares Material einbringbar ist. Die Reaktionsräume 51 sind bezüglich der Umgebung offen ausgeführt, wobei das obere Teilelement 19b, welches den ersten Reaktionsraum 50, den ersten Übergangsbereich 31 und die Durchführung 32 aufweist bzw. definiert so ausgeführt sind, dass die Wandungen 30 des oberen Teilelementes 19b mit den Wandungen 34 des unteren Teilelementes 19a in Eingriff gebracht werden können, insbesondere das obere Teilelement 19b in das untere Teilelement 19a eingesteckt werden kann, so dass die beiden Teilelemente zumindest teilweise kraft- oder formschlüssig ineinander eingreifen und eine im wesentlichen flüssigkeitsdichte Verbindung zwischen ihnen besteht. Auf die gleiche Weise lässt sich das Konzentrationsmodul 18 in das obere Teilelement 19b einstecken und das Abdeckmodul 17 in das Konzentrationselement.

Gemäß dem hier dargestellten Ausführungsbeispiel sind die Wandungen des unteren und oberen Teilelements sowie des Konzentrationsmoduls und des Abdeckmoduls so ausgeführt, dass ein flächiges Probenmaterial in den Verbindungsbereichen zwischen den einzelnen Elementen bzw. Modulen gemäß der Ausführungen zu Figur 4c und 4d in einzelne Probesegmente zerteilt wird.

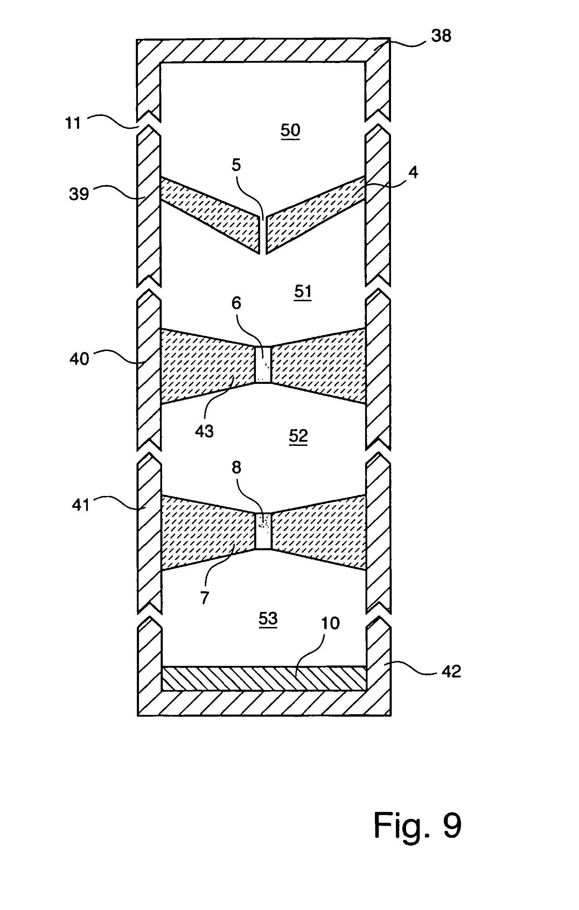

Figur 9 zeigt eine Ausführungsform einer mehrstufigen Reaktionseinrichtung Hierbei sind zwischen dem Unterteil 42 und dem Abdeckelement 38 drei Zwischenelemente 39, 40 und 41 angeordnet.

Bei dieser Ausführungsform ist zwischen den Abdeckelementen und den ersten Zwischenelement 39 der 1. Reaktionsraum gebildet, wobei der erste Übergangsbereich 5 durch das Begrenzungselement 4 definiert wird und in den zwischen ersten und zweiten Zwischenelement 40 gebildeten zweiten Reaktionsraum 51 mündet. Der zweite Reaktionsraum wird durch das zweite Zwischenelement begrenzt, welches einen durch ein drittes Begrenzungselement 43 begrenzten dritten Übergangsbereich 6 aufweist und welches in den dritten Reaktionsraum 52 mündet, der zwischen dem zweiten und dritten Zwischenelement 41 angeordnet ist. Der dritte Reaktionsraum ist durch den zweiten Übergangsbereich 8, welcher durch das zweite Begrenzungselement 7 definiert wird mit dem vierten Reaktionsraum verbunden, wobei der zweite Übergangsbereich im dritten Zwischenelement angeordnet ist. Vorzugsweise ist im vierten Reaktionsraum zumindest bereichsweise ein absorbierendes und/oder adsorbierendes Material 10 angeordnet.

Gemäß eines möglichen Untersuchungsablaufes wird das zu verarbeitende biologische Material in den ersten Reaktionsraum 50 eingebracht und die Reaktionseinrichtung geschlossen, wobei eine beliebige Zahl an Zwischenelementen zwischen Unterteil 42 und Abdeckelement 38 eingefügt werden kann.

Durch die Anwendung einer Kraft, insbesondere Druck, Unterdruck oder einer Schwerkraft, wird das zu verarbeitende Material durch den Übergangsbereich 5 in den zweiten Reaktionsraum 51 befördert, wobei es dabei gegebenenfalls eine Zustandsänderung erfährt.

Vorzugsweise ist die Form des Übergangsbereiches 5 derart gewählt, dass beispielsweise eine Polymer- bzw. Gelmatrix zumindest teilweise zerstört wird.

Das in den zweiten Reaktionsraum 51 eingebrachte Material wird gegebenenfalls nach einer vorgegebenen Inkubationszeit wiederum durch die Anwendung einer Kraft, welche von der zuvor angewandten Kraft in ihrer Art oder Intensität verschieden ist durch den zweiten Übergangsbereich 6 hindurch in den dritten Reaktionsraum 52 befördert. Besonders bevorzugt ist daher innerhalb des Übergangsbereiches 6 zumindest teilweise ein poröses, gitterförmiges, absorbierendes oder adsorbierendes Material angeordnet, welches zumindest einen Teil des Materials beim Durchgang durch den Übergangsbereich filtriert, abtrennt, separiert, absorbiert und/oder adsorbiert. Durch weitere entsprechend analoge Verfahrenschritte wird das Material bis in den vierten Reaktionsraum befördert, wo es zumindest teilweise vom absorbierenden oder adsorbierenden Material absorbiert oder adsorbiert wird. Die von den porösen, gitterförmigen, absorbierenden oder adsorbierenden Materialien können durch ein voneinander Trennen der Zwischenelemente und ein nachfolgendes Resuspendieren bzw. Lösen mittels eines polaren oder unpolaren Lösungsmittels für weitere Analysen zur Verfügung gestellt werden.

Im Gegensatz zu den zuvor beschriebenen Ausführungsbeispielen ist bei der Reaktionseinrichtung gemäß Fig. 9 die Durchführung einer Vielzahl von Reaktionen, insbesondere Trenn-, Filter-, Konzentrations- und/oder ad- bzw. absorbtionsvorgängen mit einer Vielzahl von biologischen Materialien oder Substanzen möglich, indem lediglich eine Variation der Intensität oder Art der angewendeten Kräfte ohne eine Änderung ihrer Wirkungsrichtung erfolgt.

Gemäß der hier dargestellten Ausführungsbeispiele wird deutlich, dass in Abhängigkeit der gewünschten Strömungsrichtung die Reaktionseinrichtung oder die darin enthaltenen Substanzen einer in unterschiedliche Richtungen wirkenden Kraft ausgesetzt werden können, wie dies beispielsweise durch ein unterschiedlich orientiertes Einbringen in den Läufen einer Zentrifuge erfolgen kann.

## Patentansprüche

1. Reaktionseinrichtung zur Verarbeitung biologischen Materials, insbesondere zur Verarbeitung von Material, das Polypeptide und/oder Polynucleotide enthält,
wobei die Reaktionseinrichtung wenigstens einen ersten Reaktionsraum (50) aufweist, welcher der Aufnahme des biologischen Materials in einem ersten, in einer Polymermatrix-Struktur eines Trägermaterials aufgenommenen Zustand dient, und
wobei die Reaktionseinrichtung wenigstens einen zweiten Reaktionsraum (51) aufweist, welcher der Aufnahme des biologischen Materials in einem zweiten, aus der Polymermatrix-Struktur teilweise befreiten Zustand dient, und
der erste Reaktionsraum mit dem zweiten Reaktionsraum durch wenigstens einen ersten Übergangsbereich (5) verbunden ist,
wobei dieser erste Übergangsbereich einen sich verengenden Querschnitt aufweist, welcher durch wenigstens ein bezüglich einer Längsachse der Reaktionseinrichtung geneigt verlaufendes Begrenzungselement (4) begrenzt wird, und in eine Kapillare übergeht, und
**dadurch gekennzeichnet, dass**
dieser erste Übergangsbereich eine Zerstörung der Polymermatrix-Struktur bei ihrer Beförderung durch den ersten Übergangsbereich hindurch bewirkt und hierdurch das biologische Material in den zweiten Zustand übergeht, und
der zweite Reaktionsraum vollständig gegenüber der Umgebung abgeschlossen ist.

2. Reaktionseinrichtung gemäß Anspruch 1, **dadurch gekennzeichnet, dass**
wenigstens ein Begrenzungselement des ersten Übergangsbereiches zumindest teilweise eine Wandung (1) der Reaktionseinrichtung ist.

3. Reaktionseinrichtung gemäß Anspruch 1, **dadurch gekennzeichnet, dass**
zumindest in einem Teilbereich des zweiten Reaktionsraumes, wenigstens ein physikalisch und/oder biochemisch aktives bzw. aktivierbares Material (9) vorgesehen ist, welches insbesondere enzymatisch aktiv ist und besonders bevorzugt Proteasen oder Nukleasen enthält.

4. Reaktionseinrichtung gemäß Anspruch 3, **dadurch gekennzeichnet, dass**
die physikalische oder biochemische Aktivität des aktiven Materials reduziert ist und dessen Aktivität durch eine exogene Einflußnahme auf das aktive Material gesteigert wird.

5. Reaktionseinrichtung gemäß Anspruch 1, **dadurch gekennzeichnet, dass**
der Querschnitt der Reaktionseinrichtung zumindest teilweise aus einer Gruppe von Querschnitten ausgewählt ist, welche kreisförmige Querschnitte, elliptische Querschnitte, polygonförmige Querschnitte, rechteckige Querschnitte, quadratische Querschnitte, trigonale Querschnitte, pentagonale Querschnitte und hexagonale Querschnitte enthält.

6. Reaktionseinrichtung gemäß Anspruch 1, **dadurch gekennzeichnet, dass**
der erste Reaktionsraum der Reaktionseinrichtung durch wenigstens einen freien Querschnitt mit einem dritten Reaktionsraum (52) verbunden ist, wobei der freie Querschnitt vorzugsweise durch die Wandungen der Reaktionseinrichtung begrenzt wird.

7. Reaktionseinrichtung gemäß Anspruch 6, **dadurch gekennzeichnet, dass**
die begrenzenden Wandungen (1) des freien Querschnittes der Reaktionseinrichtung wenigstens einseitig zumindest teilweise schräg abgekantet sind.

8. Reaktionseinrichtung gemäß Anspruch 6, **dadurch gekennzeichnet, dass**
mit der Reaktionseinrichtung ein Abdeckelement (3) lösbar verbunden ist, welches den freien Querschnitt des ersten Reaktionsraumes abdeckt, wobei das Abdeckelement zumindest teilweise einen Querschnitt aufweist, der dem Querschnitt der Reaktionseinrichtung im wesentlichen entspricht.

9. Reaktionseinrichtung gemäß Anspruch 8, **dadurch gekennzeichnet, dass**
das Abdeckelement Wandungen aufweist, die mit den begrenzenden Wandungen im Bereich des freien Querschnittes der Reaktionseinrichtung im wesentlichen formschlüssig sind.

10. Reaktionseinrichtung gemäß Anspruch 8, **dadurch gekennzeichnet, dass**
zumindest an einem Teilbereich des Abdeckelementes ein absorbierendes und/oder adsorbierendes Material (10) angebracht ist oder das Abdeckelement zumindest bereichsweise ein absorbierendes und/oder adsorbierendes Material ist.

11. Reaktionseinrichtung gemäß Anspruch 8, **dadurch gekennzeichnet, dass**
die lösbare Verbindung des Abdeckelementes mit der Reaktionseinrichtung durch ein Verriegelungselement gehalten wird.

12. Reaktionseinrichtung gemäß Anspruch 8, **dadurch gekennzeichnet, daß**
im Abdeckelement ein weiterer Reaktionsraum angeordnet ist.

13. Reaktionseinrichtung gemäß Anspruch 8, **dadurch gekennzeichnet, dass**
mit der Reaktionseinrichtung ein Konzentrationselement (2) lösbar verbunden ist, welches den freien Querschnitt des ersten Reaktionsraumes abdeckt und welches vorzugsweise zwischen dem ersten Reaktionsraum der Reaktionseinrichtung und dem Abdeckelement (3) angeordnet ist und bevorzugt zumindest teilweise einen Querschnitt aufweist, der dem Querschnitt der Reaktionseinrichtung und/oder dem Querschnitt des Abdeckelementes im wesentlichen entspricht, wobei das Konzentrationselement wenigstens einen zweiten Übergangsbereich aufweist, der wenigstens einen sich verengenden Querschnitt aufweist, welcher durch wenigstens ein bezüglich der Längsachse der Reaktionseinrichtung zumindest teilweise geneigt verlaufendes zweites Begrenzungselement (7) begrenzt wird.

14. Reaktionseinrichtung gemäß Anspruch 13, **dadurch gekennzeichnet, dass**
das Konzentrationselement Wandungen aufweist, die mit den begrenzenden Wandungen des freien Querschnittes der Reaktionseinrichtung im wesentlichen formschlüssig sind und/oder die mit den Wandungen des Abdeckelementes im wesentlichen formschlüssig sind.

15. Reaktionseinrichtung gemäß Anspruch 13, **dadurch gekennzeichnet, dass**
zwischen dem Konzentrationselement und dem Abdeckelement ein vierter Reaktionsraum (53) angeordnet ist.

16. Reaktionseinrichtung gemäß Anspruch 13, **dadurch gekennzeichnet, dass**
zumindest in einem Teilbereich des zweiten Übergangsbereiches ein zweites absorbierendes und/oder adsorbierendes Material (8) angeordnet ist, welches vorzugsweise aus einer Gruppe ausgewählt ist, die Vlies, Zellulose, Superabsorber, Kohlenstoffverbindungen, Kohlenwasserstoffverbindungen, säulenchromatographisches Adsorptionsmaterial, poröse Materialien, Mineralien und Salze enthält.

17. Reaktionseinrichtung gemäß einem der Ansprüche 1, 8 oder 13, **dadurch gekennzeichnet, dass**
die Außenkontur der Reaktionseinrichtung, des Abdeckelementes und/oder des Konzentrationselementes bezüglich einer Symmetrieachse (24), Symmetrieebene (23) und/oder eines Symmetriepunktes zumindest teilweise symmetrisch ausgeführt ist, vorzugsweise im wesentlichen symmetrisch ist.

18. Reaktionsmodul zur Verarbeitung mehrerer biologischer Materialien, insbesondere zur Verarbeitung mehrerer Materialien, die Polypeptide und/oder Polynucleotide enthalten, **dadurch gekennzeichnet, dass**
das Reaktionsmodul wenigstens zwei miteinander verbundene, vorzugsweise lösbar verbundene Reaktionseinrichtungen gemäß wenigstens einem der Ansprüche 1 bis 17 aufweist.

19. Verwendung einer Reaktionseinrichtung gemäß einem der Ansprüche 1 bis 17 oder einem Reaktionsmodul gemäß Anspruch 18 in einer Reaktionsvorrichtung, durch welche eine Kraft auf die Reaktionseinrichtung bzw. das Reaktionsmodul und/oder die darin enthaltenen Substanzen ausgeübt wird.

20. Verfahren zur Verarbeitung mehrerer biologischer Materialien, insbesondere zur Verarbeitung mehrerer Materialien, die Polypeptide und/oder Polynucleotide enthalten, mittels einer Reaktionseinrichtung gemäß wenigstens einem der Ansprüche 1 bis 17, oder mittels eines Reaktionsmoduls gemäß Anspruch 18 **dadurch gekennzeichnet, dass**
a) ein biologisches Material in einem ersten, in einer Polymermatrix-Struktur eines Trägermaterials aufgenommenen Zustand in einen ersten Reaktionsraum (50) eingebracht wird;
b) das biologische Material in dem ersten Zustand durch Krafteinwirkung durch den ersten Übergangsbereich hindurch in den zweiten Reaktionsraum (51) befördert wird und dabei eine Zerstörung der Polymermatrix-Struktur, in welcher das biologische Material aufgenommen ist, erfolgt und hierdurch das biologische Material in einen zweiten Zustand übergeht.

21. Verfahren gemäß Anspruch 20, **dadurch gekennzeichnet, dass**
im zweiten Reaktionsraum ein aktives Material (9) auf das biologische Material in dem zweiten Zustand einwirkt.

22. Verfahren gemäß Anspruch 20, **dadurch gekennzeichnet, dass**
das biologische Material in dem dritten Zustand durch Krafteinwirkung durch den zweiten Übergangsbereich hindurch in den vierten Reaktionsraum (53) überführt wird und dabei in den vierten Zustand übergeht,
wobei beim Durchgang des biologischen Materials durch den zweiten Übergangsbereich vorzugsweise zumindest ein Teil des biologischen Materials durch ein erstes absorbierendes und/oder adsorbierendes Material (8) absorbiert und/oder adsorbiert wird
und/oder zumindest ein Teil des im vierten Zustand enthaltenen biologischen Materials durch ein zweites absorbierendes und/oder adsorbierendes Material (10) in einem vierten Reaktionsraum absorbiert und/oder adsorbiert wird

23. Verfahren gemäß Anspruch 22, **dadurch gekennzeichnet, dass**
zumindest ein Teil des durch das erste absorbierende und/oder adsorbierende Material absorbierten und/oder adsorbierten biologischen Materials gelöst wird, vorzugsweise durch ein Lösungsmittel gelöst wird.

24. Verfahren gemäß Anspruch 20, **dadurch gekennzeichnet, dass**
beim Einbringen des biologischen Materials im ersten Zustand in den ersten Reaktionsraum eine gleichzeitige Trennung des biologischen Materials im ersten Zustand von einer Kombination vieler biologischer Materialien erfolgt, vorzugsweise eine gleichzeitige Trennung des biologischen Materials im ersten Zustand von und/oder aus einer ausgedehnten Matrix, welche eine Vielzahl biologischer Materialien enthält, erfolgt.

## Claims

1. A reaction device for processing biological material, particularly for processing material containing polypeptides and/or polynucleotides, the reaction device comprising
at least one first reaction space (50) serving to receive the biological material in a first state accommodated in a polymer matrix structure of a carrier material, and
at least one second reaction space (51) serving to receive the biological material in a second state partly released from the polymer matrix structure, and
the first reaction space being connected to the second reaction space by at least one first transition zone (5),
said first transition zone comprising a narrowing cross-section defined by at least one defining element (4) oriented inclined relative to a longitudinal centerline of the reaction device and merging into a capillary, and
**characterized in that**
said first transition zone causes destruction of the polymer matrix structure when being transported through the first transition zone, resulting in the biological material changing to the second state, and
the second reaction space being completely shut off from the environment.

2. The reaction device as set forth in claim 1, **characterized in that**
at least one defining element of the first transition zone is at least partly a wall (1) of the reaction device.

3. The reaction device as set forth in claim 1, **characterized in that**
in at least a portion of the second reaction space at least one physically and/or biochemically active or activatable material (9) is provided, the active or activatable material being particularly enzymatically active and preferably containing proteases or nucleases.

4. The reaction device as set forth in claim 3, **characterized in that**
the physical or biochemical activity of the active material is reduced and its activity is enhanced by an exogenic influence on the active material.

5. The reaction device as set forth in claim 1, **characterized in that**
the cross-section of the reaction device is selected, at least in part, from a group of cross-sections containing circular cross-sections, elliptical cross-sections, polygon-shaped cross-sections, rectangular cross-sections, square cross-sections, trigonal cross-sections, pentagonal cross-sections and hexagonal cross-sections.

6. The reaction device as set forth in claim 1, **characterized in that**
the first reaction space of the reaction device is connected to a third reaction space (52) by at least one free cross-section, the free cross-section preferably being defined by the walls of the reaction device.

7. The reaction device as set forth in claim 6, **characterized in that**
the defining walls (1) of the free cross-section of the reaction device are bevelled, at least in part, to at least one side.

8. The reaction device as set forth in claim 6, **characterized in that**
releasably connected to the reaction device is a cover element (3) covering the free cross-section of the first reaction space, the cover element comprising, at least in part, a cross-section substantially corresponding to the cross-section of the reaction device.

9. The reaction device as set forth in claim 8, **characterized in that**
the cover element comprises walls substantially positively connected to the defining walls in the region of the free cross-section of the reaction device.

10. The reaction device as set forth in claim 8, **characterized in that**
an absorbent and/or adsorbent (10) is provided in at least a portion of the cover element or the cover element is, at least in portions, an absorbent and/or adsorbent.

11. The reaction device as set forth in claim 8, **characterized in that**
the releasable connection of the cover element with the reaction device is held by a locking element.

12. The reaction device as set forth in claim 8, **characterized in that**
another reaction space is disposed in the cover element.

13. The reaction device as set forth in claim 8, **characterized in that**
releasably connected to the reaction device is a concentration element (2) covering the free cross-section of the first reaction space, the concentration element preferably being disposed between the first reaction space of the reaction device and the cover element (3) and preferably comprising, at least in part, a cross-section substantially corresponding to the cross-section of the reaction device and/or to the cross-section of the cover element, the concentration element comprising at least one second transition zone featuring at least one narrowing cross-section, the second transition zone being defined by at least one second defining element (7) oriented, at least in part, inclined to the longitudinal centerline of the reaction device.

14. The reaction device as set forth in claim 13, **characterized in that**
the concentration element comprises walls substantially positively connected to the defining walls of the free cross-section of the reaction device and/or substantially positively connected to the walls of the cover element.

15. The reaction device as set forth in claim 13, **characterized in that**
a fourth reaction space (53) is disposed between the concentration element and the cover element.

16. The reaction device as set forth in claim 13, **characterized in that**
a second absorbent and/or adsorbent (8) is arranged in at least a portion of the second transition zone, the second absorbent and/or adsorbent preferably being selected from a group containing fleece, cellulose, superabsorbers, carbon compounds, hydrocarbon compounds, column chromatographic adsorbents, porous materials, minerals, and salts.

17. The reaction device as set forth in any of claims 1, 8 or 13, **characterized in that**
the outer contour of the reaction device, the cover element and/or the concentration element is configured symmetrical to an axis (24), a plane (23) and/or a point of symmetry at least in part, preferably configured substantially symmetrical.

18. A reaction module for processing several biological materials, more particularly for processing multiple materials containing polypeptides and/or polynucleotides,
**characterized in that**
the reaction module comprises at least two interconnected reaction devices as set forth in at least one of claims 1 to 17, the connection of the reaction devices preferably being releasable.

19. Use of a reaction device as set forth in any of claims 1 to 17, or a reaction module as set forth in claim 18, in a reaction apparatus which exerts a force on the reaction device or reaction module and/or the substances contained therein.

20. A method for processing multiple biological materials, more particularly for processing multiple materials containing polypeptides and/or polynucleotides, by means of a reaction device as set forth in at least one of claims 1 to 17, or by means of a reaction module as set forth in claim 18,
**characterized in that**
a) a biological material in a first state accommodated in a polymer matrix of a carrier material is introduced into a first reaction space (50);
b) the biological material in the first state is transported by the effect of a force through the first transition zone into the second reaction space (51), in which process the polymer matrix accommodating the biological material is destroyed, the biological material thereby being changed into a second state.

21. The method as set forth in claim 20, **characterized in that**
in the second reaction space an active material (9) acts on the biological material in the second state.

22. The method as set forth in claim 20, **characterized in that**
the biological material in the third state is transported by the effect of a force through the second transition zone into the fourth reaction space (53), thereby changing into the fourth state,
wherein on passage of the biological material through the second transition zone at least part of the biological material is preferably absorbed and/or adsorbed by a first absorbent and/or adsorbent (8)
and/or at least part of the biological material in the fourth state is absorbed and/or adsorbed by a second absorbent and/or adsorbent (10) in a fourth reaction space.

23. The method as set forth in claim 22, **characterized in that**
at least part of the biological material absorbed and/or adsorbed by the first absorbent and/or adsorbent is dissolved, and preferably dissolved by a solvent.

24. The method as set forth in claim 20, **characterized in that**
simultaneously with introducing the biological material in the first state into the first reaction space the biological material is separated in the first state from a combination of many biological materials, preferably as simultaneous separation of the biological material in the first state from and/or out of an expansive matrix containing a plurality of biological materials.

## Revendications

1. Dispositif de réaction pour traitement de matériaux biologiques en particulier pour traitement de matériau qui contient polypeptide et/ou polynucléotide
où le dispositif de réaction présente au moins une chambre de réaction (50) qui sert à la réception du matériau biologique dans un premier état reçu dans une structure de matrice de polymère d'un matériau porteur, et
où le dispositif de réaction présente au moins une deuxième chambre de réaction (51) qui sert à la réception du matériau biologique dans un deuxième état libéré en partie de la structure de matrice de polymères,
et la première chambre de réaction est liée à la deuxième chambre de réaction par au moins une première zone de jonction (5),
où cette première zone de jonction présente une coupe transversale se rétrécissant qui est limitée par au moins un élément de limitation (4) passant incliné relativement à un axe longitudinal et passe dans un tube capillaire, et
**caractérisé en ce que**
cette première zone de jonction provoque une destruction de la structure de matrice de polymère lors de son acheminement à travers la première zone de jonction et ainsi le matériau biologique passe dans le second état, et
la deuxième chambre de réaction est entièrement fermée par rapport à l'environnement.

2. Dispositif de réaction selon la revendication 1, **caractérisé en ce qu'**au moins un élément de limitation de la première zone de jonction est au moins en partie une paroi (1) du dispositif de réaction.

3. Dispositif de réaction selon la revendication 1, **caractérisé en ce qu'**au moins dans une section de la deuxième chambre de réaction au moins un matériau actif ou activable physiquement et/ou biochimiquement (9) est prévu, qui est en particulier actif de manière enzymatique et qui comprend de manière particulièrement préférée des protéases ou nucléases.

4. Dispositif de réaction selon la revendication 3, **caractérisé en ce que** l'activité physique ou biochimique du matériau actif est réduite et son activité est augmentée par une prise d'influence exogène sur le matériau actif

5. Dispositif de réaction selon la revendication 1, **caractérisé en ce que** la coupe transversale du dispositif de réaction est au moins en partie sélectionnée parmi un groupe de coupes transversales qui comprend les coupes transversales circulaires, les coupes transversales elliptiques, les coupes transversales en forme de polygone, les coupes transversales rectangulaires, les coupes transversales carrées, les coupes transversales trigonales, les coupes transversales pentagonales et les coupes transversales hexagonales.

6. Dispositif de réaction selon la revendication 1, **caractérisé en ce que** la première chambre de réaction du dispositif de réaction est liée à une troisième chambre de réaction (52) par au moins une coupe transversale libre, où la coupe transversale libre est de préférence limitée par les parois du dispositif de réaction.

7. Dispositif de réaction selon la revendication 6, **caractérisé en ce que** les parois limitantes (6) de la coupe transversale libre du dispositif de réaction sont pliées au moins d'un côté au moins en partie en biais.

8. Dispositif de réaction selon la revendication 6, **caractérisé en ce qu'**un élément de recouvrement (3) est lié de manière détachable avec le dispositif de réaction qui recouvre la coupe transversale libre de la première chambre de réaction où l'élément de recouvrement au moins en partie présente une coupe transversale qui en substance correspond à la coupe transversale du dispositif de réaction.

9. Dispositif de réaction selon la revendication 8, **caractérisé en ce que** l'élément de recouvrement présente des parois, qui sont en substance complémentaires aux parois limitantes dans la zone de la coupe transversale libre du dispositif de réaction.

10. Dispositif de réaction selon la revendication 8, **caractérisé en ce qu'**au moins à une section de l'élément de recouvrement un matériau absorbant et/ou adsorbant (10) est disposé ou l'élément de recouvrement est au moins par zone un matériau absorbant et/ou adsorbant.

11. Dispositif de réaction selon la revendication 8, **caractérisé en ce que** la liaison détachable de l'élément de recouvrement avec le dispositif de réaction est tenue par un élément de verrouillage.

12. Dispositif de réaction selon la revendication 8, **caractérisé en ce que** dans l'élément de recouvrement une autre chambre de réaction est disposée.

13. Dispositif de réaction selon la revendication 8, **caractérisé en ce qu'**un élément de concentration (2) est lié de manière détachable avec le dispositif de réaction, élément de concentration qui recouvre la coupe transversale libre de la première chambre de réaction et qui est de préférence disposé entre la première chambre de réaction du dispositif de réaction et l'élément de recouvrement (3) et qui présente de préférence au moins en partie une coupe transversale, qui correspond en substance à la coupe transversale du dispositif de réaction et/ou à la coupe transversale de l'élément de recouvrement, où l'élément de concentration présente au moins une deuxième zone de jonction qui présente au moins une coupe transversale se rétrécissant, qui est limitée par au moins un deuxième élément de limitation (7) passant incliné au moins en partie relativement à l'axe longitudinal du dispositif de réaction.

14. Dispositif de réaction selon la revendication 13, **caractérisé en ce que** l'élément de concentration présente des parois qui sont en substance complémentaires aux parois limitantes de la coupe transversale libre du dispositif de réaction et/ou qui sont en substance complémentaires aux parois de l'élément de recouvrement.

15. Dispositif de réaction selon la revendication 13, **caractérisé en ce qu'**entre l'élément de concentration et l'élément de recouvrement une quatrième chambre de réaction (53) est disposée.

16. Dispositif de réaction selon la revendication 13, **caractérisé en ce qu'**au moins dans une section de la deuxième zone de jonction, un deuxième matériau absorbant et/ou adsorbant (8) est disposé, qui est de préférence sélectionné parmi un groupe qui comprend les voiles, celluloses, superabsorbants, liaisons carboniques, liaisons hydrocarbures, matériau d'absorption colonne chromatographique, matériaux poreux, minéraux et sels.

17. Dispositif de réaction selon la revendication 1, 8 ou 13, **caractérisé en ce que** le contour extérieur du dispositif de réaction de l'élément de recouvrement et/ou de l'élément de concentration est réalisé au moins en partie symétriquement, relativement à un axe de symétrie (24), un plan de symétrie (23), et/ou un point de symétrie, de préférence est en substance symétrique.

18. Module de réaction pour traitement de plusieurs matériaux biologiques en particulier pour traitement de plusieurs matériaux qui comprennent les polypeptides et/ou polynucléotides, **caractérisé en ce que** le module de réaction présente au moins deux dispositifs de réaction liés ensemble de préférence liés de manière détachable, selon au moins une des revendications 1 à 17.

19. Utilisation d'un dispositif de réaction selon une des revendications 1 à 17 ou d'un module de réaction selon la revendication 18 dans un dispositif de réaction, par laquelle une force est exercée sur le dispositif de réaction ou le module de réaction et/ou les substances contenues là dedans.

20. Procédé pour traitement de plusieurs matériaux biologiques en particulier pour traitement de plusieurs matériaux qui comprennent les polypeptides et/ou les polynucléotides, au moyen d'un dispositif de réaction selon au moins une des revendications 1 à 17, ou au moyen d'un module de réaction selon la revendication 18, **caractérisé en ce que**
a) un matériau biologique est mis dans un premier état reçu dans une structure de matrice de polymère d'un matériau porteur, dans une première chambre de réaction (50) ;
b) le matériau biologique dans le premier état est acheminé dans la deuxième chambre de réaction (51) par action de force à travers la première zone de jonction et ainsi s'ensuit une destruction de la structure de matrice de polymère, dans laquelle le matériau biologique est reçu et ainsi le matériau biologique passe dans un deuxième état.

21. Procédé selon la revendication 20 **caractérisé en ce que** dans une deuxième chambre de réaction un matériau actif (9) agit sur le matériau biologique dans le deuxième état.

22. Procédé selon la revendication 20 **caractérisé en ce que** le matériau biologique dans le troisième état est transféré par action de force à travers la deuxième zone de jonction, dans la quatrième chambre de réaction (53) et ainsi passe dans le quatrième état,
où lors du passage du matériau biologique à travers la deuxième zone de jonction au moins une partie du matériau biologique est absorbé et/ ou adsorbé par un premier matériau absorbant et/ou adsorbant (8)
et/ou au moins une partie du matériau biologique compris dans le quatrième état est absorbé et/ou adsorbé par un deuxième matériau absorbant et/ou adsorbant (10) dans une quatrième chambre de réaction.

23. Procédé selon la revendication 22 **caractérisé en ce qu'**au moins une partie du matériau biologique absorbé et/ou adsorbé est dissout par le premier matériau absorbant et/ou adsorbant, de préférence est dissous à par un solvant.

24. Procédé selon la revendication 20 **caractérisé en ce que** lors de l'introduction du matériau biologique dans le premier état dans la première chambre de réaction, une séparation en même temps du matériau biologique dans le premier état d'une combinaison de beaucoup de matériaux biologiques se produit, de préférence une séparation en même temps du matériau biologique dans le premier état d'une matrice allongée qui comprend une pluralité de matériaux biologiques, se produit.
